# EUROPEAN PATENT APPLICATION

(11) **EP 4 752 917 A1**
(43) Date of publication of application: **03.06.2026**
(21) Application number: 24916761.0
(22) Date of filing: 27.12.2024
(51) Int. Cl.: H01F 27/28

(54) **COIL MODULE, ELECTRONIC DEVICE, AND WIRELESS CHARGING SYSTEM**

(30) Priority: 11.01.2024 CN 202410047758; 06.03.2024 CN 202410255807
(71) Applicant: Honor Device Co., Ltd., Shenzhen, Guangdong 518040 (CN)
(72) Inventor: HUANG, Xunhe, Shenzhen, Guangdong 518040 (CN); HUANG, Hua, Shenzhen, Guangdong 518040 (CN)
(74) Representative: Gill Jennings & Every LLP
(86) International application number: PCT/CN2024/143122
(87) International publication number: WO 2025/148714

(57) **Abstract**

This application provides a coil module, an electronic device, and a wireless charging system, and relates to the field of wireless charging technologies, to resolve a problem that a relatively thick wireless charging coil module in the conventional technology is not conducive to disposing another functional component in the electronic device. The coil module includes a coil structure. The coil structure includes a functional layer, and in a thickness direction of the coil structure, the functional layer includes a first wiring sublayer, a second wiring sublayer, and an insulation sublayer located between the first wiring sublayer and the second wiring sublayer. The coil structure further includes a first end, a second end, and a plurality of coil groups sequentially connected in series. The first end and the plurality of coil groups are disposed in the first wiring sublayer, and an outermost coil group is connected to the first end. The second end is disposed in the second wiring sublayer. A via hole is disposed in the insulation sublayer, and a connection structure is disposed in the via hole. An innermost coil group is connected to the second end through the connection structure in the insulation sublayer, so that the first end is electrically connected to the second end through the plurality of coil groups sequentially connected in series.

## Description

This application claims priorities to Chinese Patent Application No. 202410047758.4, filed with the China National Intellectual Property Administration on January 11, 2024 and entitled "COIL MODULE, ELECTRONIC DEVICE, AND WIRELESS CHARGING SYSTEM", and to Chinese Patent Application No. 202410255807.3, filed with the China National Intellectual Property Administration on March 6, 2024 and entitled "COIL MODULE, ELECTRONIC DEVICE, AND WIRELESS CHARGING SYSTEM", both of which are incorporated herein by reference in their entireties.

### TECHNICAL FIELD

This application relates to the field of wireless charging technologies, and in particular, to a coil module, an electronic device, and a wireless charging system.

### BACKGROUND

Because a wireless charging manner is safer, more reliable, and easier to use than a wired charging manner, an increasing quantity of electronic devices such as mobile phones, tablet computers, and smartwatches use a wireless charging technology. A key component for implementing the wireless charging technology is a wireless charging coil module.

However, an existing wireless charging coil module is relatively thick. For an electronic device with increasing functions (for example, advanced functions such as a biometric recognition technology, high-quality imaging, and artificial intelligence), this is not conducive to disposing a functional component (for example, a functional component corresponding to the biometric recognition technology, a functional component corresponding to high-quality imaging, and a functional component corresponding to artificial intelligence) in the electronic device. How to resolve the foregoing problem is currently a problem to be urgently resolved.

### SUMMARY

To resolve the foregoing technical problem, this application provides a coil module, an electronic device, and a wireless charging system, to resolve a problem that a relatively thick wireless charging coil module in the conventional technology is not conducive to disposing another functional component in the electronic device.

According to a first aspect, an embodiment of this application provides a coil module. The coil module includes a coil structure. The coil structure includes a functional layer, and in a thickness direction of the coil structure, the functional layer includes a first wiring sublayer, a second wiring sublayer, and an insulation sublayer located between the first wiring sublayer and the second wiring sublayer. The coil structure further includes a first end, a second end, and a plurality of coil groups sequentially connected in series. The first end and the plurality of coil groups are disposed in the first wiring sublayer, and an outermost coil group is connected to the first end. The second end is disposed in the second wiring sublayer. A via hole is disposed in the insulation sublayer, and a connection structure is disposed in the via hole. An innermost coil group is connected to the second end through the connection structure in the insulation sublayer, so that the first end is electrically connected to the second end through the plurality of coil groups sequentially connected in series.

In this application, the plurality of coil groups that occupy a relatively large area are disposed in the first wire sublayer, and the second wiring sublayer includes only the second end that occupies a relatively small area. In this way, when the coil module is disposed in an electronic device, another trace of the electronic device may be disposed on the second wiring sublayer, to avoid occupation of internal space of the electronic device by the another trace, and help dispose another structure. Alternatively, because the second wiring sublayer includes only the second end that occupies a relatively small area, the second end that occupies a relatively small area may be built into another structure of the electronic device, so that the coil module occupies a relatively small amount of internal space of the electronic device, to help dispose another structure.

For example, the thickness direction of the coil structure may be a thickness direction of the electronic device, or may be a direction in which a center axis passing through centers of the plurality of coil groups is located. The thickness direction of the coil structure is perpendicular to the first wiring sublayer, the second wiring sublayer, and the insulation sublayer.

According to the first aspect, the coil module further includes a magnetically conductive layer. The magnetically conductive layer includes a hollowed-out portion, and the second end is disposed in the hollowed-out portion.

The magnetically conductive layer is disposed to concentrate a magnetic field, improve coil inductance of the coil module, and further shield some magnetic fields, so as to reduce an eddy current loss generated by the magnetic field on some structures (for example, a middle frame, a battery, and a printed circuit board) of the electronic device. In addition, by building the second end of the coil structure into the magnetically conductive layer, occupation of the thickness direction of the coil module by the second end can be avoided. This reduces a thickness of the coil module, and can make a wireless charging coil excessively thin, which is highly advantageous in terms of thickness. For example, the thickness of the coil module is less than 0.2 mm. For example, the thickness of the coil module is only 0.1X mm (where X is 1, 2, 3, 4, 5, 6, 7, 8, 9, or the like, that is, the thickness of the coil module is only 0.11 mm, 0.12 mm, 0.13 mm, 0.14 mm, 0.15 mm, 0.16 mm, 0.17 mm, 0.18 mm, or 0.19 mm), or certainly, may be less than 0.1 mm.

According to the first aspect or any implementation of the first aspect, in the thickness direction of the coil structure, the magnetically conductive layer includes a first protective sublayer, a second protective sublayer, and a magnetically conductive sublayer located between the first protective sublayer and the second protective sublayer, and the magnetically conductive sublayer includes a plurality of layers of adhesive and a nanocrystal located between two adjacent layers of adhesive. The first protective sublayer is disposed adjacent to the coil structure, and adhesive disposed adjacent to the second protective sublayer is first adhesive. A first hole is disposed in a film layer in which the first protective sublayer, other adhesive different from the first adhesive, and the nanocrystal are located, a second hole is disposed in a film layer in which the first adhesive and the second protective sublayer are located, and the first hole and the second hole form the hollowed-out portion. A projection of the second hole on a reference plane is within a projection of the first hole on the reference plane, and the reference plane is perpendicular to the thickness direction of the coil structure.

A hole between the first adhesive and the second protective sublayer is made small, that is, edges that are of the first adhesive and the second protective sublayer and that face the hollowed-out portion partially extend toward the hollowed-out portion. In this way, powder of the nanocrystal can be prevented from falling out, making a structure of the coil module more reliable.

For example, the reference plane is parallel to the first wiring sublayer, and other film layers in the coil module are parallel to each other.

For example, the magnetically conductive sublayer includes three layers of adhesive and two layers of nanocrystals located between two adjacent layers of adhesive.

According to the first aspect or any implementation of the first aspect, the coil structure further includes a flexible circuit board unit. The flexible circuit board unit is located in a preset region in the second wiring sublayer, and the preset region is a region that is in the second wiring sublayer and in which the second end is not disposed.

That is, when the coil module is disposed in the electronic device, the flexible circuit board in the electronic device may be disposed in the second wiring sublayer, that is, the coil module includes both a wireless charging coil and the flexible circuit board in the electronic device. In this way, occupation of internal space of the electronic device by another flexible circuit board is avoided, to help dispose another structure and reduce a process step.

According to the first aspect or any implementation of the first aspect, the preset region includes a first sub-region, and the first sub-region is a region formed by outwardly extending a projection of the outermost coil group on the second wiring sublayer by a first preset length in all directions. When a line width of the flexible circuit board unit in the first sub-region is greater than a second preset length, a trace of the flexible circuit board unit in the first sub-region is cut into a plurality of lines.

That is, a relatively wide trace of the flexible circuit board unit in the first sub-region is cut into a plurality of thin lines, to avoid generation of an excessively high eddy current loss on the relatively wide trace.

For example, the first preset length may be 5 mm. The second preset length may be 8 mm.

According to the first aspect or any implementation of the first aspect, the coil module further includes a magnetically conductive layer. In the thickness direction of the coil structure, the magnetically conductive layer is located on a side that is of the second wiring sublayer and that faces away from the first wiring sublayer.

The magnetically conductive layer is disposed on the side that is of the second wiring sublayer and that faces away from the first wiring sublayer, that is, the first wiring sublayer including the coil group is disposed away from a nanocrystal side, to help improve mutual inductance and achieve better wireless charging performance.

Certainly, the magnetically conductive layer may alternatively be located on a side that is of the first wiring sublayer and that faces away from the second wiring sublayer.

According to the first aspect or any implementation of the first aspect, there are N coil groups, and N is less than or equal to 8 and greater than or equal to 7.

In such an arrangement, the coil structure achieves a balance between effects of high power and high-freedom wireless charging.

For example, there are seven or eight coil groups. Certainly, there may alternatively be 7.5 coil groups or the like.

According to the first aspect or any implementation of the first aspect, there are seven coil groups, a thickness of the first wiring sublayer is greater than or equal to 25 µm and less than or equal to 40 µ, each coil group includes M strands of wires, and M is greater than or equal to 3.

In such an arrangement, even if the coil group is relatively thick, generation of a relatively high eddy current loss on the relatively thick coil group can be avoided.

For example, M is 4.

According to the first aspect or any implementation of the first aspect, there are seven coil groups, a thickness of the first wiring sublayer is less than or equal to 25 µm, each coil group includes M strands of wires, and M is less than or equal to 4.

The M strands of wires are formed through trace cutting. Therefore, when M is less than or equal to 4, a waste of a relatively large amount of trace space can be avoided, and a relatively good through-current effect can be achieved.

For example, M is 3.

According to the first aspect or any implementation of the first aspect, there are eight coil groups, a thickness of the first wiring sublayer is greater than or equal to 25 µm and less than or equal to 40 µ, each coil group includes M strands of wires, and M is greater than or equal to 2.

In such an arrangement, even if the coil group is relatively thick, generation of a relatively high eddy current loss on the relatively thick coil group can be avoided. In addition, there is no relatively high impedance due to an increase in a quantity of coil groups.

For example, M is 3.

According to the first aspect or any implementation of the first aspect, there are eight coil groups, a thickness of the first wiring sublayer is less than or equal to 25 µm, each coil group includes M strands of wires, and M is less than or equal to 3.

The M strands of wires are formed through trace cutting. Therefore, when M is less than or equal to 4, a waste of a relatively large amount of trace space can be avoided, and a relatively good through-current effect can be achieved. In addition, there is no relatively high impedance due to an increase in a quantity of coil groups.

For example, M is 3.

According to the first aspect or any implementation of the first aspect, in a direction away from a center of the coil structure, widths of the plurality of coil groups gradually increase. In such an arrangement, current distribution is relatively uniform.

For example, there are eight coil groups, and coil groups from an innermost position to an outermost position are a first coil group, a second coil group, a third coil group, a fourth coil group, a fifth coil group, a sixth coil group, a seventh coil group, and an eighth coil group. That widths of the plurality of coil groups gradually increase may be that widths of the first coil group, the second coil group, the third coil group, the fourth coil group, the fifth coil group, the sixth coil group, the seventh coil group, and the eighth coil group sequentially increase. That widths of the plurality of coil groups gradually increase may alternatively be that widths of some adjacent coil groups in the eight coil groups are the same, and in the direction away from the center of the coil structure, widths of coil groups with different widths gradually increase. For example, widths of the first coil group and the second coil group are the same, widths of the third coil group, the fourth coil group, and the fifth coil group are the same, widths of the sixth coil group, the seventh coil group, and the eighth coil group are the same, and widths of the first coil group, the third coil group, and the sixth coil group sequentially increase. For another example, widths of the third coil group, the fourth coil group, and the fifth coil group are the same, widths of the sixth coil group and the seventh coil group are the same, and widths of the first coil group, the second coil group, the third coil group, the sixth coil group, and the eighth coil group sequentially increase.

For example, quantities of strands in all the coil groups may be the same, for example, 3 or 4.

According to the first aspect or any implementation of the first aspect, there are N coil groups, and the N coil groups include L inner coil groups and (N-L) outer coil groups disposed around the L inner coil groups. Each coil group includes a plurality of strands of wires. A quantity of strands of wires located in the outer coil group is greater than a quantity of strands of wires located in the inner coil group.

In such an arrangement, current distribution is relatively uniform.

For example, there are N coil groups, and coil groups from an innermost position to an outermost position are a first coil group, a second coil group, a third coil group, a fourth coil group, a fifth coil group, a sixth coil group, a seventh coil group, and an eighth coil group. Quantities of strands in the fifth coil group, the sixth coil group, the seventh coil group, and the eighth coil group are the same, quantities of strands in the first coil group, the second coil group, the third coil group, and the fourth coil group are the same, and a quantity of strands in the eighth coil group is greater than a quantity of strands in the first coil group. Alternatively, quantities of strands in the second coil group, the third coil group, the fourth coil group, the fifth coil group, the sixth coil group, the seventh coil group, and the eighth coil group are the same, and a quantity of strands in the eighth coil group is greater than a quantity of strands in the first coil group. Alternatively, quantities of strands in the sixth coil group, the seventh coil group, and the eighth coil group are the same, quantities of strands in the fourth coil group and the fifth coil group are the same, quantities of strands in the first coil group, the second coil group, and the third coil group are the same, a quantity of strands in the eighth coil group is greater than a quantity of strands in the fifth coil group, and the quantity of strands in the fifth coil group is greater than a quantity of strands in the first coil group.

According to the first aspect or any implementation of the first aspect, the coil structure is an FPC coil.

The FPC coil is relatively flat and thin. This further facilitates a thin and lightweight design of a device that uses the coil module.

According to a second aspect, an embodiment of this application provides an electronic device. The electronic device includes the coil module according to any one of the first aspect and the implementations of the first aspect.

The second aspect corresponds to the first aspect and any implementation of the first aspect. For technical effects corresponding to the second aspect, refer to the technical effects corresponding to the first aspect and any implementation of the first aspect. Details are not described herein.

According to the second aspect, the coil structure further includes at least one flexible circuit board unit. The flexible circuit board unit is located in a preset region in the second wiring sublayer, and the preset region is a region that is in the second wiring sublayer and in which the second end is not disposed. The electronic device further includes a printed circuit board, and the flexible circuit board unit is connected to the printed circuit board.

The flexible circuit board that is in the electronic device and that is connected to the printed circuit board may be disposed in the second wiring sublayer, that is, the coil module includes both a wireless charging coil and the flexible circuit board in the electronic device. In this way, occupation of internal space of the electronic device by another flexible circuit board is avoided, to help dispose another structure and reduce a process step.

For example, only one flexible circuit board that is in the electronic device and that is connected to the printed circuit board may be disposed in the second wiring sublayer, or two flexible circuit boards that are in the electronic device and that are connected to the printed circuit board may be disposed in the second wiring sublayer, or a plurality of (for example, three or more) flexible circuit boards that are in the electronic device and that are connected to the printed circuit board may be disposed in the second wiring sublayer.

According to the second aspect or any implementation of the second aspect, the printed circuit board includes a main board and a sub-board, and the main board is connected to the sub-board through the flexible circuit board unit.

That is, the flexible circuit board connecting the main board to the sub-board is disposed in the second wiring sublayer. Compared with a manner in which the flexible circuit board connecting the main board to the sub-board is disposed in accommodation space of the electronic device, this can reduce occupation of internal space of the electronic device by the flexible circuit board, to help dispose another structure.

According to the second aspect or any implementation of the second aspect, the electronic device further includes a functional component, and the functional component is connected to the printed circuit board through the flexible circuit board unit.

That is, the flexible circuit board connecting the functional component to the printed circuit board is disposed in the second wiring sublayer. Compared with a manner in which the flexible circuit board connecting the functional component to the printed circuit board is disposed in accommodation space of the electronic device, this can reduce occupation of internal space of the electronic device by the flexible circuit board, to help dispose another structure.

For example, the functional component includes a speaker or a SIM card. Certainly, the functional component is not limited thereto.

According to the second aspect or any implementation of the second aspect, the flexible circuit board unit is disposed as an NFC coil. That is, the NFC coil is disposed in the second wiring sublayer. Compared with a manner in which the NFC coil is disposed in accommodation space of the electronic device, this can reduce occupation of internal space of the electronic device by the flexible circuit board, to help dispose another structure.

According to the second aspect or any implementation of the second aspect, the electronic device includes a wireless charging receiving device or a wireless charging sending device. That is, a receive coil in the wireless charging receiving device may be the coil module according to any one of the first aspect and the implementations of the first aspect, and/or a transmit coil in the wireless charging sending device may be the coil module according to any one of the first aspect and the implementations of the first aspect.

According to a third aspect, an embodiment of this application provides a wireless charging system. The wireless charging system includes the electronic device according to any one of the second aspect and the implementations of the second aspect.

The third aspect corresponds to the second aspect and any implementation of the second aspect. For technical effects corresponding to the third aspect and any implementation of the third aspect, refer to the technical effects corresponding to the second aspect and any implementation of the second aspect. Details are not described herein.

### BRIEF DESCRIPTION OF DRAWINGS

FIG. 1 is a schematic diagram of a structure of a wireless charging system according to an embodiment of this application;
FIG. 2 is a schematic diagram of a circuit structure of a wireless charging system according to an embodiment of this application;
FIG. 3 is a schematic diagram of a structure of a wireless charging receiving device shown in FIG. 1;
FIG. 4 is a diagram of a film layer in a coil module according to Embodiment 1 of this application;
FIG. 5A is a perspective view of a coil module according to Embodiment 1 of this application;
FIG. 5B is a plan view of the coil module shown in FIG. 5A;
FIG. 5C is an exploded view of a coil structure in the coil module shown in FIG. 5A;
FIG. 5D is an exploded view of the coil module shown in FIG. 5A;
FIG. 6 is an exploded view of another coil module according to Embodiment 1 of this application;
FIG. 7 is an exploded view of another coil module according to Embodiment 1 of this application;
FIG. 8 is an exploded view of another coil module according to Embodiment 1 of this application;
FIG. 9 is a simulation diagram of current density distribution on a coil module according to Embodiment 1 of this application;
FIG. 10 is another simulation diagram of current density distribution on a coil module according to Embodiment 1 of this application;
FIG. 11 is another simulation diagram of current density distribution on a coil module according to Embodiment 1 of this application;
FIG. 12 is a diagram of a film layer in a coil module according to Embodiment 2 of this application;
FIG. 13 is a plan view of a coil module according to Embodiment 2 of this application; and
FIG. 14 is an exploded view of the coil module shown in FIG. 13.

### DESCRIPTION OF EMBODIMENTS

The following clearly and completely describes the technical solutions in the embodiments of this application with reference to the accompanying drawings in the embodiments of this application. Clearly, the described embodiments are some but not all of the embodiments of this application. All other embodiments obtained by persons of ordinary skill in the art based on the embodiments of this application without creative efforts shall fall within the protection scope of this application.

The term "and/or" in this specification is merely an association relationship for describing associated objects and represents that three relationships may exist. For example, A and/or B may represent the following three cases: Only A exists, both A and B exist, and only B exists.

The terms "first", "second", and the like in the specification and the claims of the embodiments of this application are used to distinguish between different objects, and are not used to describe a particular order of the objects. For example, a first target object and a second target object are used to distinguish between different target objects, and are not used to describe a particular order of the target objects.

In the embodiments of this application, words such as "example" or "for example" are used to represent giving an example, an illustration, or a description. Any embodiment or design solution described as an "example" or "for example" in the embodiments of this application should not be explained as being more preferred or having more advantages than another embodiment or design solution. Exactly, use of the words such as "example" or "for example" is intended to present a related concept in a specific manner.

In the descriptions of the embodiments of this application, unless otherwise specified, "a plurality of" means two or more. For example, "a plurality of processing units" means two or more processing units, and "a plurality of systems" means two or more systems.

The connection relationship described in this application means a direct or indirect connection. For example, that A is connected to B may be that A is directly connected to B, or A is indirectly connected to B through one or more other electrical elements. For example, A may be directly connected to C, and C may be directly connected to B, so that A is connected to B through C. It may be further understood that "A is connected to B" described in this application may be that A is directly connected to B, or A is indirectly connected to B through one or more other electrical elements.

Terms in this application are first explained.

A layer means a quantity of planes on which wires included in the coil provided in this application are arranged. When all wires included in a coil are wound on a same plane to form a planar coil, the coil is a one-layer wound coil. When all wires included in a coil are not arranged on a same plane, for example, a first wire is wound on a first planar layer, a second wire is wound on a second planar layer, and the first wire and the second wire are connected through a via hole in an insulation layer between the first planar layer and the second planar layer, it indicates that the coil is a two-layer wound coil.

A quantity of turns means a quantity of circles by which a wire is wound in each coil.

A quantity of strands means a quantity of parallel wires in each turn of coil during coil winding.

The following describes a technical scenario in the embodiments of this application.

The technical solutions in this application are applied to a wireless charging technology scenario. The scenario includes a wireless charging device and a to-be-charged device. The wireless charging device is configured to charge the to-be-charged device with a wireless charging function. For example, the wireless charging device may be a wireless charging mobile power supply, a wireless charging pad, or a wireless charger, and the to-be-charged device may be an electronic device such as a mobile phone, a tablet, a notebook computer, a personal digital assistant (personal digital assistant, PDA for short), a vehicle-mounted computer, a smart wearable device (for example, a smartwatch, a smart band, or a headset), a virtual reality (virtual reality, VR) device, or an augmented reality (augmented reality, AR) device. The to-be-charged device may alternatively be an electronic product such as a wireless charging electric vehicle, a wireless charging household appliance (for example, a sweeping robot), or an unmanned aerial vehicle. For another example, the wireless charging device may be a tablet, a notebook computer, or a mobile phone, and the to-be-charged device may be a stylus or a magnetic keyboard.

The wireless charging device may also be referred to as a wireless charging sending device, and the to-be-charged device may also be referred to as a wireless charging receiving device.

To enable persons skilled in the art to better understand the technical solutions provided in the embodiments of this application, the following briefly describes a wireless charging principle in the wireless charging technology scenario. An example in which the wireless charging sending device is a wireless charger, and the wireless charging receiving device is a mobile phone is used for description. In addition, in the following other content, an example in which the wireless charging sending device is a wireless charger, and the wireless charging receiving device is a mobile phone is used for description.

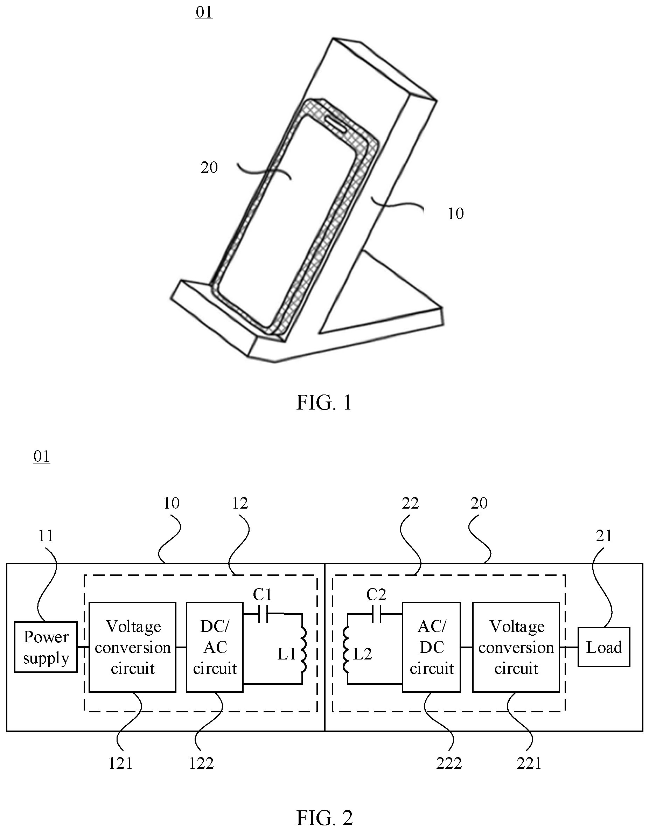

Refer to FIG. 1. FIG. 1 is a schematic diagram of a structure of a wireless charging system according to an embodiment of this application. As shown in FIG. 1, the wireless charging system 01 includes a wireless charging sending device 10 and a wireless charging receiving device 20. The wireless charging sending device 10 may be a wireless charger, the wireless charging receiving device 20 may be a mobile phone, and the wireless charger wirelessly charges the mobile phone.

It should be noted that the wireless charger shown in FIG. 1 is inclined to a specific angle, so that the mobile phone can lean against and is in close contact with the wireless charger. Certainly, this does not constitute a limitation on this application. In another optional embodiment of this application, the wireless charger may alternatively be in another form. For example, the wireless charger is in a flat plate shape, and the wireless charger supports horizontal placement of the mobile phone on the wireless charger.

Refer to FIG. 2. FIG. 2 is a schematic diagram of a circuit structure of a wireless charging system according to an embodiment of this application. As shown in FIG. 2, the wireless charging sending device 10 includes a power supply 11 and a wireless sending apparatus 12.

The power supply 11 is configured to provide a direct current voltage. To distinguish from another direct current voltage, the direct current voltage provided by the power supply 11 is a first direct current voltage.

The wireless sending apparatus 12 includes a direct current (Direct Current, DC)/alternating current (Alternating Current, AC) circuit 122, a resonant capacitor C1, and a transmit coil L1.

In some embodiments, the wireless sending apparatus 12 further includes a voltage conversion circuit 121. The voltage conversion circuit 121 is electrically connected to the power supply 11, and is configured to convert the first direct current voltage output by the power supply 11 into a stable second direct current voltage. For example, the voltage conversion circuit 121 may be a step-up circuit (for example, a boost circuit, a step-up transformer, or a power amplifier), and is configured to: step up the first direct current voltage output by the power supply 11, and then output the voltage.

When the voltage conversion circuit 121 is a step-up circuit, a potential difference between the wireless charging sending device 10 and the wireless charging receiving device 20 may be increased, and an energy transfer capability of the system may be improved, to facilitate high-power transmission.

Certainly, the voltage conversion circuit 121 is not limited to a step-up circuit, and may alternatively be a step-down circuit, configured to: step down the first direct current voltage output by the power supply 11 and then output the voltage. Persons skilled in the art may set the voltage conversion circuit 121 based on an actual situation.

The DC/AC circuit 122 is electrically connected to the voltage conversion circuit 121, and is configured to convert the second direct current voltage output by the voltage conversion circuit 121 into an alternating current. For example, the DC/AC circuit 122 may be an inverter bridge, and a circuit structure of the DC/AC circuit 122 may be a full-bridge circuit or a half-bridge circuit. The DC/AC circuit 122 is also referred to as a transmit (Transmit, TX) chip.

The resonant capacitor C1 and the transmit coil L1 are connected in series to form a series resonant network, and the transmit coil L1 is electrically connected to the DC/AC circuit 122 through the resonant capacitor C1. In a process in which the DC/AC circuit 122 charges and discharges the resonant capacitor C1 and the transmit coil L1, the transmit coil L1 can convert the alternating current into an alternating magnetic field.

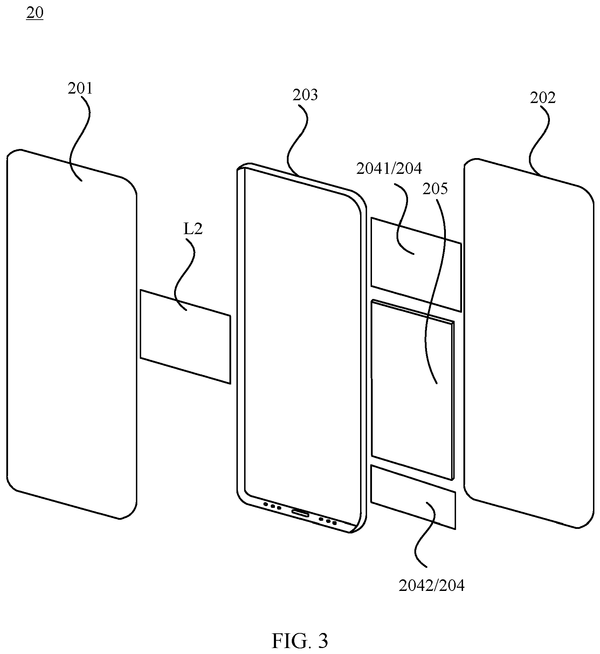

With reference to FIG. 3, FIG. 3 is a schematic diagram of a structure of the wireless charging receiving device shown in FIG. 1. As shown in FIG. 3, the wireless charging receiving device 20, for example, a mobile phone, includes a rear housing 201, a display screen 202, and a middle frame 203. The display screen 202 and the rear housing 201 are respectively located on two sides of the middle frame 203, and the rear housing 201, the display screen 202, and the middle frame 203 may form an accommodation cavity through enclosing. Structures such as a printed circuit board (Printed Circuit Board, PCB) 204, a battery 205, a speaker (not shown in the figure), a SIM card holder for carrying a SIM card, and a near field communication (Near Field Communication, NFC) coil (not shown in the figure) are disposed in the accommodation cavity. In this embodiment of this application, the PCB 204 includes a main board 2041 and a sub-board 2042, and the main board 2041 and the sub-board 2042 may be connected through a flexible printed circuit (Flexible Printed Circuit, FPC).

Still with reference to FIG. 2 and FIG. 3, the wireless charging receiving device 20 further includes a wireless receiving apparatus 22 and a load 21. The load 21 is load resistance equivalent to a power-consuming unit at a back end of the system. The load 21 may be a battery or the like, or may be another component that needs to be charged.

The wireless receiving apparatus 22 includes a receive coil L2, a resonant capacitor C2, and an AC/DC circuit 222.

The receive coil L2 is located in the accommodation cavity, for example, may be located between the battery 205 and the rear housing 201. The receive coil L2 may be connected to the PCB 204 through an FPC (not shown in the figure).

The resonant capacitor C2 and the AC/DC circuit 222 are disposed on the PCB 204 (for example, the main board 2041), and the receive coil L2 is connected to the resonant capacitor C2 and the AC/DC circuit 222 through the FPC and the PCB 204 (signal transmission and interaction may be performed). In addition, the AC/DC circuit 222 is further connected to the load 21.

When the wireless charging sending device 10 needs to charge the wireless charging receiving device 20, the receive coil L2 is close to or in contact with the transmit coil L1. In this case, the receive coil L2 in the wireless charging receiving device 20 generates an alternating current through electromagnetic induction. The AC/DC circuit 222 converts the alternating current generated by the receive coil L2 into a direct current, and outputs the alternating current to the load 21 to supply power to the load 21. For example, the AC/DC circuit 222 may be, for example, a rectifier bridge, and a circuit structure of the AC/DC circuit 222 may be a full-bridge circuit or a half-bridge circuit. The AC/DC circuit 222 is also referred to as a receive (Receive, RX) chip.

In some embodiments, when the AC/DC circuit 222 outputs an excessively high direct current that cannot be directly provided to the load 21, the wireless receiving apparatus 22 may further include a voltage conversion circuit 221. The voltage conversion circuit 221 is separately electrically connected to the AC/DC circuit 222 and the load 21, and is configured to reduce a relatively high voltage output by the AC/DC circuit 222 to a voltage required by the load 21. For example, the voltage conversion circuit 221 may be a step-down circuit (also referred to as a buck circuit).

In some embodiments, the voltage conversion circuit 221 may alternatively be a switched-capacitor converter (Switch Capacitor Converter, SC) circuit (not shown in the figure). The SC circuit may implement, for example, step-down conversion at a ratio such as 2:1 or 4:1. For a specific structure of the SC circuit and a principle of implementing step-down conversion, refer to the conventional technology.

In some embodiments, the wireless charging receiving device 20 may be further charged in a wired manner. When the wireless charging receiving device 20 may be charged in a wired manner, the wireless charging receiving device 20 further includes a USB port. The USB port is electrically connected to the voltage conversion circuit 221, and a charging signal received by the USB port is transmitted to the voltage conversion circuit 221, to reduce, through the voltage conversion circuit 221, the relatively high charging signal to a charging signal required by the load 21, so as to supply power to the load 21. In some embodiments, an overvoltage protection (overvoltage protection, OVP) circuit is disposed between the USB port and the voltage conversion circuit 221. The OVP circuit may include an OVP switching transistor, and the switching transistor may be a mos transistor. When detecting that a voltage applied to the USB port is excessively high (exceeds a threshold voltage), the OVP circuit may actively cut off the connection between the voltage conversion circuit 221 and the USB port, to protect the voltage conversion circuit 221.

The foregoing describes the structure of the wireless charging system 01. It may be learned from the foregoing content that the wireless charging technology implements power transmission by using an electromagnetic coupling principle. That is, an alternating current carried in a transmit coil on a wireless charging sending device side generates a varying magnetic field, and a receive coil on a wireless charging receiving device side generates an induced current in the varying magnetic field, to charge the wireless charging receiving device side. Therefore, a key component for implementing the wireless charging technology is a wireless charging coil module, namely, the foregoing transmit coil L1 and/or the foregoing receive coil L2. However, a coil module in the conventional technology is relatively thick. For example, a thickness of an existing wireless charging coil module is usually between 0.2 mm-0.3 mm. For an electronic device with increasing functions (for example, advanced functions such as a biometric recognition technology, high-quality imaging, and artificial intelligence), this is not conducive to disposing a functional component (for example, a functional component corresponding to the biometric recognition technology, a functional component corresponding to high-quality imaging, and a functional component corresponding to artificial intelligence) in the electronic device.

To resolve the foregoing problem, this application provides a coil module. The coil module may be applied to a wireless charging receiving device, that is, the coil module may be a receive coil in the wireless charging receiving device; or may be applied to a wireless charging sending device, that is, the coil module may be a transmit coil in the wireless charging sending device. The following describes in detail a structure of the coil module provided in the embodiments of this application.

It should be noted that the coil module provided in this application is not only applicable to a wireless charging scenario, but also applicable to another scenario in which an electromagnetic induction principle is used.

### Embodiment 1

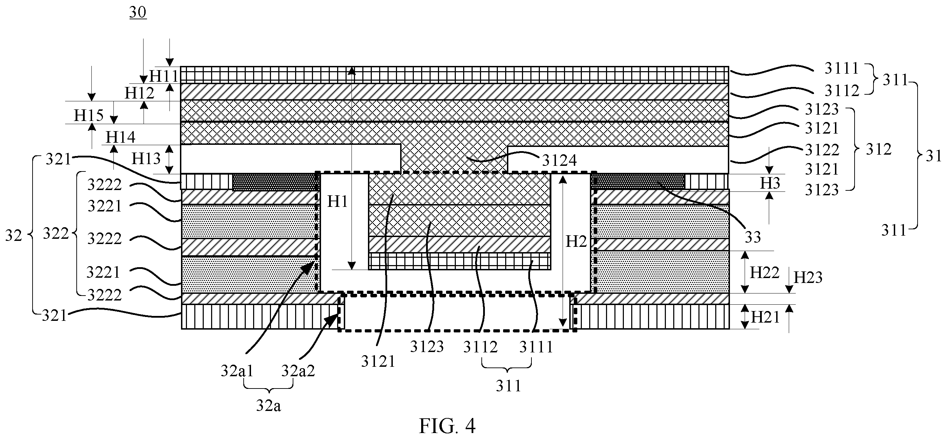

Refer to FIG. 4. FIG. 4 is a diagram of a film layer structure in a coil module according to Embodiment 1 of this application. As shown in FIG. 4, the coil module 30 includes a coil structure 31 and a magnetically conductive layer 32. The coil structure 31 and the magnetically conductive layer 32 are fastened together through a double-sided adhesive layer (for example, double-sided adhesive tape) 33.

The magnetically conductive layer 32 is disposed to concentrate a magnetic field and improve coil inductance of the coil module 30. In addition, it may be learned from the foregoing content that the coil module 30 may be disposed in a wireless charging receiving device 20, and the wireless charging receiving device 20 may include structures such as a PCB 204, a battery 205, and a middle frame 203. The structures such as the PCB 204, the battery 205, and the middle frame 203 are usually made of metal, and the magnetic field generates an eddy current loss on the PCB 204, the battery 205, the middle frame 203, and the like. The magnetically conductive layer 32 is disposed to further shield some magnetic fields, so as to reduce an eddy current loss generated by the magnetic field on the PCB 204, the battery 205, the middle frame 203, and the like.

For example, the magnetically conductive layer 32 includes two protective sublayer 321 and a magnetically conductive sublayer 322 located between the two protective sublayer 321. The two protective sublayers 321 may include a first protective sublayer and a second protective sublayer, and the first protective sublayer is disposed adjacent to the coil structure 31. The protective sublayer 321 may be a nanocrystalline black film or polyimide (Polymide, PI). The magnetically conductive sublayer 322 includes a soft magnetic material. The soft magnetic material includes ferrite, a nanocrystal, or the like. In FIG. 4, an example in which the soft magnetic material includes a nanocrystal is used for description. When the soft magnetic material includes a nanocrystal, the magnetically conductive sublayer 322 includes a plurality of layers of nanocrystals 3221 and a plurality of layers of adhesive 3222 that are used to bond the nanocrystals 3221 together and that are located on two sides of the nanocrystals 3221. In FIG. 4, an example in which the magnetically conductive sublayer 322 includes two layers of nanocrystals 3221 and three layers of adhesive 3222 is used for description.

A thickness H21 of the protective sublayer 321 may be 5 µm, a thickness H22 of the nanocrystal 3221 may be 17 µm, and a thickness H23 of the adhesive 3222 may be 3 µm. In this case, a thickness H2 of the magnetically conductive layer 32 is 53 µm. Certainly, the thickness of the protective sublayer 321, the thickness of the nanocrystal 3221, and/or the thickness of the adhesive 3222 may be adaptively changed to meet different requirements.

Still with reference to FIG. 4, the coil structure 31 may be an FPC coil, and the coil structure 31 includes two protective films 311 and a functional layer 312 located between the two protective films 311. The protective film 311 includes a PI layer 3111 and adhesive 3112 used to dispose the PI layer 3111 on the functional layer 312. The functional layer 312 includes two wiring sublayers 3121 and an insulation sublayer 3122 located between the two adjacent wiring sublayers 3121. The two wiring sublayers 3121 include a first wiring sublayer and a second wiring sublayer.

The wiring sublayer 3121 may be an integral metal layer. A material of the metal layer includes copper, aluminum, nickel, alloy, or the like, and then a coil is formed by etching the metal layer. A specific line design of the formed coil is described in detail in the following content. Details are not described herein.

To implement an electrical connection between the two wiring sublayers 3121, a via hole is disposed in the insulation sublayer 3122 located between the two wiring sublayers 3121, and a connection structure 3124 connecting the two wiring sublayers 3121 is disposed in the via hole. A manner of forming the connection structure 3124 is not limited in this embodiment of this application. For example, still with reference to FIG. 4, an integral connection layer 3123 may be plated on the wiring sublayer 3121. In a plating process, a material of the connection layer 3123 is partially deposited into the via hole to form the connection structure 3124. For another example, the connection structure 3124 is directly formed in the via hole in the insulation sublayer 3122.

For example, a thickness H11 of the PI layer 3111 may be 5 µm, a thickness H12 of the adhesive 3112 may be 5 µm, a thickness H13 of the insulation sublayer 3122 may be 12.5 µm, a thickness H14 of the wiring sublayer 3121 may be 12 µm, and a thickness H15 of the connection layer 3123 may be 10 µm. In this case, a thickness H1 of the coil structure 31 is 76.5 µm. Alternatively, a thickness H11 of the PI layer 3111 may be 5 µm, a thickness H12 of the adhesive 3112 may be 5 µm, a thickness H13 of the insulation sublayer 3122 may be 12.5 µm, a thickness H14 of the wiring sublayer 3121 may be 18 µm, and a thickness H15 of the connection layer 3123 may be 10 µm. In this case, a thickness H1 of the coil structure 31 is 88.5 µm.

In addition, the double-sided adhesive tape 33 between the coil structure 31 and the magnetically conductive layer 32 may be 7.5 µm.

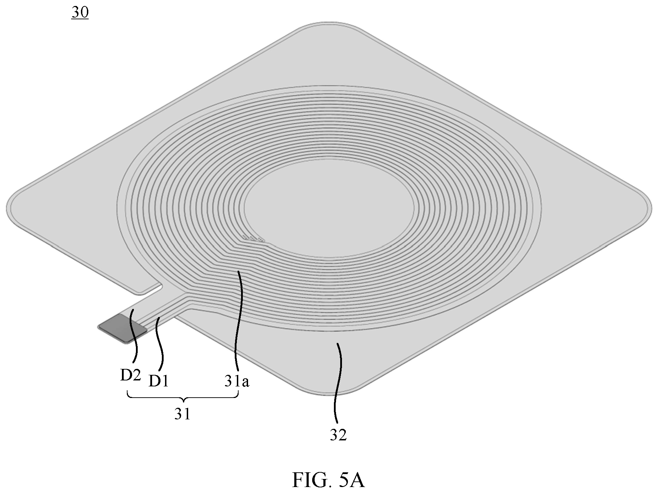

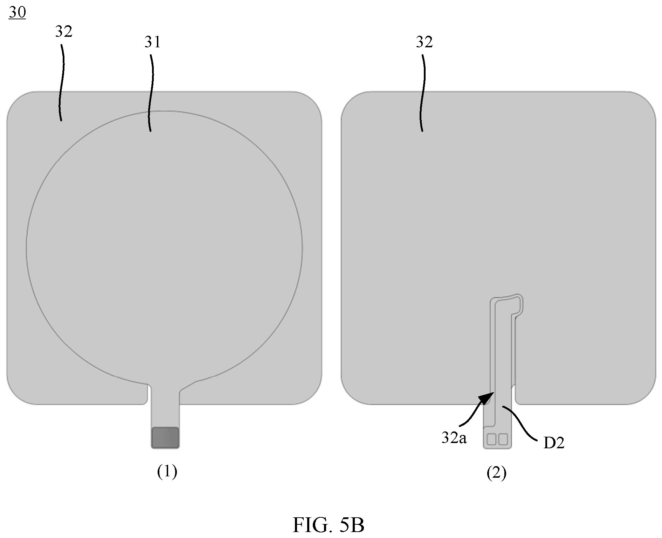

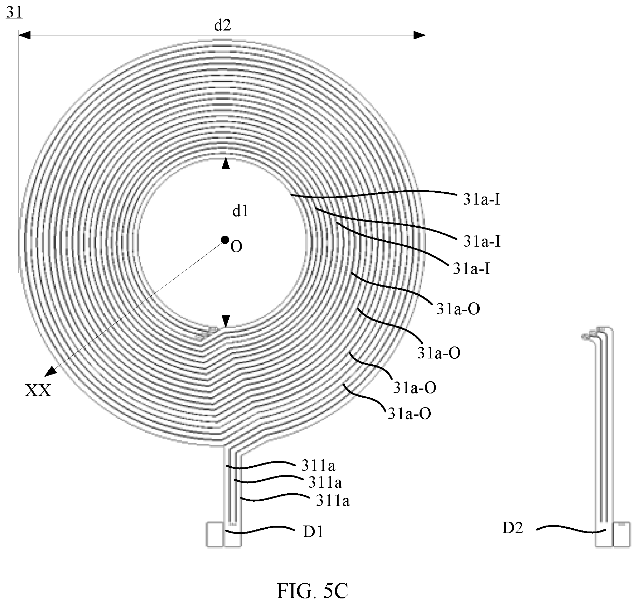

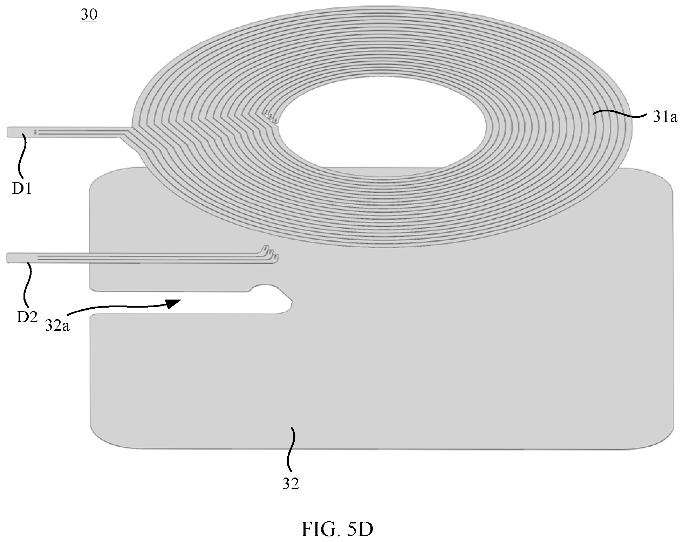

Refer to FIG. 5A-FIG. 5D. FIG. 5A is a perspective view of a coil module according to Embodiment 1 of this application. FIG. 5B is a plan view of the coil module shown in FIG. 5A, (1) in FIG. 5B is a front view, and (2) in FIG. 5B is a rear view. FIG. 5C is an exploded view of the coil module shown in FIG. 5A. FIG. 5D is an exploded view of a coil structure in the coil module shown in FIG. 5A. As shown in FIG. 4 and FIG. 5A-FIG. 5D, the coil structure 31 includes a first end D1, a second end D2, and N coil groups 31a sequentially connected in series. The first end D1 and the second end D2 are connected through the N coil groups 31a sequentially connected in series, and one coil group 31a is one circle (namely, one turn) of the coil structure 31.

The N coil groups 31a may be ring-shaped coils. An outer coil diameter d1 is less than or equal to 52 mm and greater than or equal to 46 mm; and an inner coil diameter d2 is less than or equal to 28 mm and less than or equal to 16 mm. For example, the outer coil diameter d1 is 46 mm, 47 mm, 48 mm, 49 mm, 50 mm, 51 mm, or 52 mm; and the inner coil diameter d2 is 16 mm, 17 mm, 18 mm, 19 mm, 20 mm, 21 mm, 22 mm, 23 mm, 24 mm, 25 mm, 26 mm, 27 mm, or 28 mm. It should be noted that a specific form of the ring-shaped coil is not limited in this embodiment of this application, and may be set by persons skilled in the art based on an actual situation. For example, the ring-shaped coil includes a circular ring-shaped coil, a rectangular ring-shaped coil, a hexagonal ring-shaped coil, or an octagonal ring-shaped coil. In this embodiment of this application, an example in which the ring-shaped coil is a circular ring-shaped coil is used for description.

The first end D1 and the plurality of coil groups 31a are formed by etching the first wiring sublayer and the connection layer 3123 located on the first wiring sublayer, and the second end D2 and the plurality of coil groups 31a are formed by etching the second wiring sublayer and the connection layer 3123 located on the second wiring sublayer. In addition, an outermost coil group 31a in the N coil groups 31a is connected to the first end D1, and an innermost coil group 31a in the N coil groups 31a is connected to the second end D2 through the connection structure 3124 in the via hole in the insulation sublayer 3122, so that the first end D1 is connected to the second end D2 through the plurality of coil groups 31a sequentially connected in series.

Still with reference to FIG. 4 and FIG. 5A-FIG. 5D, a hollowed-out portion 32a is disposed on the magnetically conductive layer 32, and the second end D2 of the coil structure 31 is built into the hollowed-out portion 32a. In this way, occupation of a thickness direction of the coil module 30 by the second end D2 can be avoided, and a thickness of the coil module 30 can be reduced, for example, can be reduced by a thickness of H11+H12+H14+H15=5+5+10+12=32 µm, or can be reduced by a thickness of H11+H12+H14+H15=5+5+10+18=38 µm.

To further reduce the thickness of the coil module 30, still with reference to FIG. 4, a region of a protective sublayer (namely, the first protective sublayer) 321 that is in the magnetically conductive layer 32 and that is in contact with the coil structure 31 is partially hollowed out. Through hollowing, the adhesive 3222 between the protective sublayer 321 and the nanocrystal 3221 may be exposed. The double-sided adhesive tape 33 that bonds the coil structure 31 and the magnetically conductive layer 32 is located in the hollowed-out portion 3211, and is in contact with the adhesive 3222 between the protective sublayer 321 and the nanocrystal 3221.

It may be understood that to ensure bonding strength between the coil structure 31 and the magnetically conductive layer 32, a thickness of the double-sided adhesive tape 33 still needs to be maintained at 7.5 µm. Therefore, a thickness of a film layer in which the protective sublayer 321 that is in the magnetically conductive layer 32 and that is in contact with the coil structure 31 and the double-sided adhesive tape 33 are located is 7.5 µm. In this way, the thickness of the coil module 30 can be reduced by 5 µm (a thickness of one protective sublayer 321).

In the foregoing arrangement, the thickness of the coil module 30 may be 100 µm or 106 µm, that is, the wireless charging coil module is made excessively thin, so that the coil module occupies a relatively small amount of internal space of an electronic device, to help dispose another structure.

In some embodiments, still with reference to FIG. 4, adhesive 3222 disposed adjacent to the second protective sublayer is first adhesive. A first hole 32a1 is disposed in a film layer in which the first protective sublayer, other adhesive 3222 different from the first adhesive, and the nanocrystal 3221 are located, a second hole 32a2 is disposed in a film layer in which the first adhesive and the second protective sublayer are located, and the first hole and the second hole form the hollowed-out portion 32a. The first hole 32a1 is larger than the second hole 32a2, that is, a projection of the second hole 32a2 on the second protective sublayer is within a projection of the first hole 32a1 on the second protective sublayer.

In this way, powder of the nanocrystal can be prevented from falling out, making a structure of the coil module more reliable.

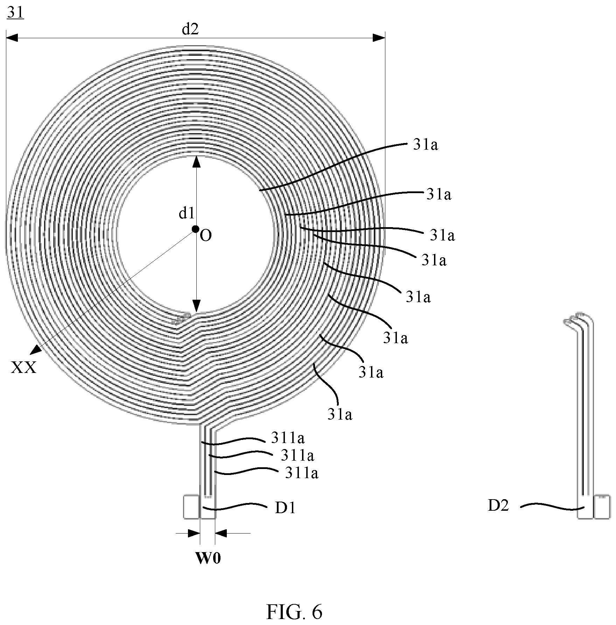

The foregoing describes the film layer structure in the coil module 30. It may be learned from the foregoing content that the thickness of the coil module 30 in this application may be only 0.1X mm. It may be understood that when the coil module is relatively thin, impedance of the coil module is usually relatively high, and relatively high impedance is not conducive to high-power charging of the wireless charging receiving device. To implement that the wireless charging receiving device has both a high-power charging effect and a thin and lightweight effect, still with reference to FIG. 5A-FIG. 5D, a quantity N of coil groups 31a is less than or equal to 8 and greater than or equal to 7, that is, a quantity of turns of the coil structure 31 is 7~8. For example, the quantity of turns of the coil structure 31 may be 7 (as shown in FIG. 5C) or 8 (as shown in FIG. 6). Certainly, the quantity of turns of the coil structure 31 may alternatively be 7.5, with 0.5 turns formed by winding a wire half a circle. For example, the 7.5 turns may be formed by performing winding half a circle based on an outermost coil group 31a in seven coil groups 31a, or may be formed by performing winding half a circle based on an innermost coil group 31a in seven coil groups 31a.

When the quantity of turns of the coil structure 31 is 7~8, the coil structure 31 achieves a balance between effects of high power and high-freedom wireless charging. In this way, there is neither a case in which charging power is affected due to an excessively large quantity of turns and relatively high impedance, nor a case in which freedom of the coil structure 31 is relatively low due to an excessively small quantity of turns, that is, when the coil module 30 is applied to the wireless charging receiving device 20, and when a quantity of turns of a transmit coil in a wireless charging sending device 10 is fixed (for example, 12 turns), an offset distance between a center of a receive coil and a center of the transmit coil is relatively short, and therefore strict alignment needs to be performed, and the freedom of the coil structure 31 is relatively low.

In some embodiments, each coil group 31a includes M strands of wires 311a, and M may be less than or equal to 4 and greater than or equal to 2. For example, M is 2, 3, or 4. In FIG. 5C and FIG. 6, an example in which M is 3 is used for description. That is, for the coil structure 31, the M strands of wires 311a are continuously wound from the first end D1 (forming N coil groups 31a sequentially connected in series) to be connected to the second end D2, and are distributed in the two wiring sublayers 3121. A current is input from the first end D1, passes through the N coil groups 31a, and is output from the second end D2.

It is set that M is less than or equal to 4 and greater than or equal to 2. In this way, there is neither a case in which a gap between two adjacent strands of wires 311a is relatively large due to a relatively large quantity of strands of wires 311 a and consequently trace space is wasted, nor a case in which a quantity of through-current channels is relatively small due to a relatively small quantity of strands of wires 311a and a skin effect and consequently current transmission is affected.

A quantity of strands in each coil group 31a may be determined based on an actual situation of the quantity of turns of the coil structure 31 and the thickness of the wiring sublayer 3121, so that the coil structure 31 achieves a balance between effects of high power and high-freedom wireless charging.

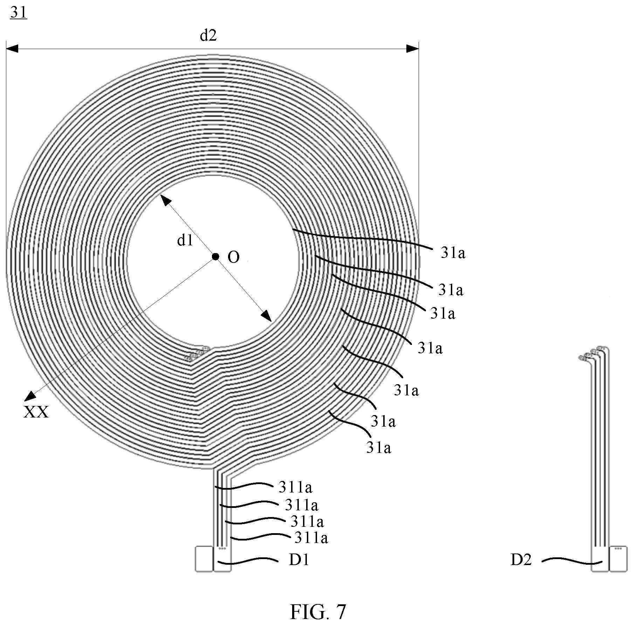

In a possible implementation, refer to FIG. 7. FIG. 7 is an exploded view of another coil module according to Embodiment 1 of this application. As shown in FIG. 7, there are seven coil groups 31a, a thickness of the first wiring sublayer is greater than or equal to 25 µm and less than or equal to 40 µ, each coil group 31a includes M strands of wires 311a, and M is greater than or equal to 3. For example, M is 4.

In such an arrangement, even if the coil group 31a is relatively thick, generation of a relatively high eddy current loss on the relatively thick coil group 31a can be avoided.

It should be noted that in this embodiment of this application, when the connection layer 3123 is disposed on the first wiring sublayer, the thickness of the first wiring sublayer further includes the thickness of the connection layer 3123.

In another possible implementation, still with reference to FIG. 5C, there are seven coil groups 31a, a thickness of the first wiring sublayer is less than or equal to 25 µm, each coil group 31a includes M strands of wires 311a, and M is less than or equal to 4. For example, M is 3.

The M strands of wires 311a are formed through trace cutting. Therefore, when M is less than or equal to 4, a waste of a relatively large amount of trace space can be avoided, a relatively large quantity of through-current channels can be ensured, and a relatively good through-current effect can be achieved.

In another possible implementation, still with reference to FIG. 6, there are eight coil groups, a thickness of the first wiring sublayer is greater than or equal to 25 µm and less than or equal to 40 µ, each coil group 31a includes M strands of wires 311a, and M is greater than or equal to 2. For example, M is 3.

In such an arrangement, even if the coil group 31a is relatively thick, generation of a relatively high eddy current loss on the relatively thick coil group 31a can be avoided. In addition, there is no relatively high impedance due to an increase in a quantity of coil groups.

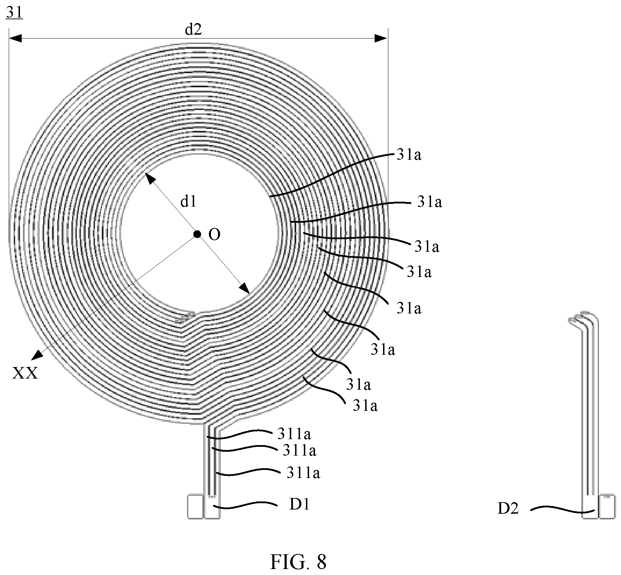

In another possible implementation, refer to FIG. 8. FIG. 8 is an exploded view of another coil module according to Embodiment 1 of this application. As shown in FIG. 8, there are eight coil groups 31a, a thickness of the first wiring sublayer is less than or equal to 25 µm, each coil group 31a includes M strands of wires 311a, and M is less than or equal to 3. For example, M is 3.

The M strands of wires 311a are formed through trace cutting. Therefore, when M is less than or equal to 3, a waste of a relatively large amount of trace space can be avoided, and a relatively good through-current effect can be achieved. In addition, there is no relatively high impedance due to an increase in a quantity of coil groups.

In some embodiments, still with reference to FIG. 5C, the N coil groups 31a include L inner coil groups 31a-I and (N-L) outer coil groups 31a-O disposed around the L inner coil groups. Each coil group 31a includes a plurality of strands of wires 311a. A quantity of strands of wires located in the outer coil group 31a-O is greater than a quantity of strands of wires located in the inner coil group 31a-I.

For the coil structure 31, due to relatively strong inner magnetic field intensity and relatively weak outer magnetic field intensity, it is set that the quantity of strands of wires located in the outer coil group 31a-O is greater than the quantity of strands of wires located in the inner coil group 31a-I, so that it can be ensured that the outer coil group 31a-O has a relatively large quantity of through-current channels, to improve current distribution uniformity.

A specific value of L is not limited in this embodiment of this application, and may be set by persons skilled in the art based on an actual situation. For example, N is 7, and L is 3. There are seven coil groups 31a, and coil groups from an innermost position to an outermost position are a first coil group, a second coil group, a third coil group, a fourth coil group, a fifth coil group, a sixth coil group, and a seventh coil group. The seven coil groups 31a include three inner coil groups 31a-I and four outer coil groups 31a-O disposed around the three inner coil groups, that is, the first coil group, the second coil group, and the third coil group are the inner coil groups 31a-I, and the fourth coil group, the fifth coil group, the sixth coil group, and the seventh coil group are the outer coil groups 31a-O. Quantities of strands of wires in the fourth coil group, the fifth coil group, the sixth coil group, and the seventh coil group are the same, quantities of strands of wires in the first coil group, the second coil group, and the third coil group are the same, and the quantities of strands of wires in the fourth coil group, the fifth coil group, the sixth coil group, and the seventh coil group are greater than the quantities of strands of wires in the first coil group, the second coil group, and the third coil group.

In some embodiments, still with reference to FIG. 6, in a direction away from a center of the coil structure, for example, a direction indicated by an arrow XX in FIG. 6, widths WO of the plurality of coil groups 31a gradually increase.

That widths of the plurality of coil groups 31a gradually increase may be that in the direction away from the center of the coil structure, the widths of the plurality of coil groups 31a gradually and sequentially increase. For example, there are eight coil groups 31a, and coil groups 31a from an innermost position to an outermost position are a first coil group, a second coil group, a third coil group, a fourth coil group, a fifth coil group, a sixth coil group, a seventh coil group, and an eighth coil group. Widths of the first coil group, the second coil group, the third coil group, the fourth coil group, the fifth coil group, the sixth coil group, the seventh coil group, and the eighth coil group sequentially increase, that is, the width of the eighth coil group is greater than the width of the seventh coil group, the width of the seventh coil group is greater than the width of the sixth coil group, the width of the sixth coil group is greater than the width of the fifth coil group, the width of the fifth coil group is greater than the width of the fourth coil group, the width of the fourth coil group is greater than the width of the third coil group, the width of the third coil group is greater than the width of the second coil group, and the width of the second coil group is greater than the width of the first coil group.

That widths of the plurality of coil groups 31a gradually increase may alternatively be that in the direction away from the center of the coil structure, widths of some adjacent coil groups 31a are the same, and widths of coil groups 31a with different widths gradually increase. For example, there are eight coil groups 31a, and coil groups 31a from an innermost position to an outermost position are a first coil group, a second coil group, a third coil group, a fourth coil group, a fifth coil group, a sixth coil group, a seventh coil group, and an eighth coil group. Widths of the first coil group and the second coil group are the same, widths of the third coil group, the fourth coil group, and the fifth coil group are the same, widths of the sixth coil group, the seventh coil group, and the eighth coil group are the same, and widths of the first coil group, the third coil group, and the sixth coil group sequentially increase.

For the coil structure 31, due to relatively strong inner magnetic field intensity and relatively weak outer magnetic field intensity, it is set that a width of an innermost coil group 31a, a width of a middle coil group 31a, and a width of an outermost coil group 31a sequentially increase, so that through-current capabilities of the innermost coil group 31a, the middle coil group 31a, and the outermost coil group 31a are gradually enhanced, to improve current distribution uniformity.

Herein, it should be noted that when the widths WO of the plurality of coil groups 31a gradually increase in the direction away from the center of the coil structure, quantities of strands of wires 311a in all the coil groups 31a may be the same, for example, 3 or 4. Certainly, quantities of strands of wires 311a in all the coil groups 31a may be different.

To facilitate understanding of the foregoing content, a specific structure of the coil module 30 provided in this embodiment of this application is described below with reference to a specific example.

Example 1: Still with reference to FIG. 4 and FIG. 7, the inner coil diameter d1 is 20 mm, the outer coil diameter d2 is 48 mm, N is 7, and M is 4. That is, in a limited region defined by the outer coil diameter d2 of 48 mm and the inner coil diameter d1 of 20 mm, the coil structure 31 uses a 7-turn, 4-strand parallel winding solution. The magnetically conductive sublayer 322 includes two layers of nanocrystals 3221 (a thickness of each layer of nanocrystal 3221 is 17 µm), and a material characteristic of the nanocrystal meets the following: Saturation magnetic flux density of the nanocrystal is 1.4 T, and relative magnetic permeability of the nanocrystal is 3000 times that of air (that is, µ'3000).

Electrical parameters in this example are shown in Table 1. In Table 1, L is inductance of the coil module, Q is a quality factor of the coil module, ARC is alternating current impedance of the coil module, and DRC is direct current impedance of the coil module.

**Table 1**

| Frequency | L/uH | Q | ARC/mΩ | Saturation current/A | DRC/mΩ | Self-resonant frequency/Mhz |
|---|---|---|---|---|---|---|
| 100 KHZ | 3.37726 | 6.15896 | 344.538 | 5.0138 | 319.162 | 8.9253 |
| 130 KHZ | 3.3738 | 7.65158 | 360.157 | 5.4174 | | |
| 145 KHZ | 3.3724 | 8.32764 | 368.948 | 5.5788 | | |
| Thickness | 0.110 mm | | | | | |

It may be learned from Table 1 that at different electromagnetic wave frequencies, the inductance L of the coil module changes. The alternating current impedance ARC increases with the frequency, but both the alternating current impedance ARC and the direct current impedance DRC are relatively low. In addition, the coil module in this example has a relatively good quality factor Q. In addition, the self-resonant frequency of the coil module in this example is 8.9253 Mhz, which is far different from a working frequency (100 KHZ, 130 KHZ, 145 KHZ, or the like) of the coil module. This does not affect wireless charging. That is, the coil module provided in this example has relatively low impedance and relatively proper inductance in a case of a very small thickness (for example, the thickness of 0.110 mm). This facilitates high-power wireless charging.

In addition, the seven coil groups 31a are a first coil group, a second coil group, a third coil group, a fourth coil group, a fifth coil group, a sixth coil group, and a seventh coil group from an inner position to an outer position. Widths of the third coil group, the fourth coil group, and the fifth coil group are the same, widths of the sixth coil group and the seventh coil group are the same, and widths of the first coil group, the second coil group, the third coil group, and the sixth coil group gradually increase. A line design of the seven coil groups 31a is specifically shown in Table 2. A wire spacing between the four strands of wires 311a in each coil group 31a is 0.06 mm. It may be understood that the wire spacing is related to a process level, and a smaller wire spacing indicates a better process level.

**Table 2**

| Coil group | Outer diameter/mm | Inner diameter/mm | Quantity of strands | Line width per strand/mm | Line width per turn/mm |
|---|---|---|---|---|---|
| Seventh coil group | 24 | 23.54 | 4 | 0.46 | 1.84 |
| | 23.48 | 23.02 | | 0.46 | |
| | 22.96 | 22.5 | | 0.46 | |
| | 22.44 | 21.98 | | 0.46 | |
| Sixth coil group | 21.92 | 21.46 | 4 | 0.46 | 1.84 |
| | 21.4 | 20.94 | | 0.46 | |
| | 20.88 | 20.42 | | 0.46 | |
| | 20.36 | 19.9 | | 0.46 | |
| Fifth coil group | 19.84 | 19.4 | 4 | 0.44 | 1.76 |
| | 19.34 | 18.9 | | 0.44 | |
| | 18.84 | 18.4 | | 0.44 | |
| | 18.34 | 17.9 | | 0.44 | |
| Fourth coil group | 17.84 | 17.4 | 4 | 0.44 | 1.76 |
| | 17.34 | 16.9 | | 0.44 | |
| | 16.84 | 16.4 | | 0.44 | |
| | 16.34 | 15.9 | | 0.44 | |
| Third coil group | 15.84 | 15.4 | 4 | 0.44 | 1.76 |
| | 15.34 | 14.9 | | 0.44 | |
| | 14.84 | 14.4 | | 0.44 | |
| | 14.34 | 13.9 | | 0.44 | |
| Second coil group | 13.84 | 13.4 | 4 | 0.44 | 1.74 |
| | 13.34 | 12.9 | | 0.44 | |
| | 12.84 | 12.4 | | 0.44 | |
| | 12.34 | 11.92 | | 0.42 | |
| First coil group | 11.86 | 11.44 | 4 | 0.42 | 1.68 |
| | 11.38 | 10.96 | | 0.42 | |
| | 10.9 | 10.48 | | 0.42 | |
| | 10.42 | 10 | | 0.42 | |
| Total width of the seven coil groups | | | | | 12.38 |

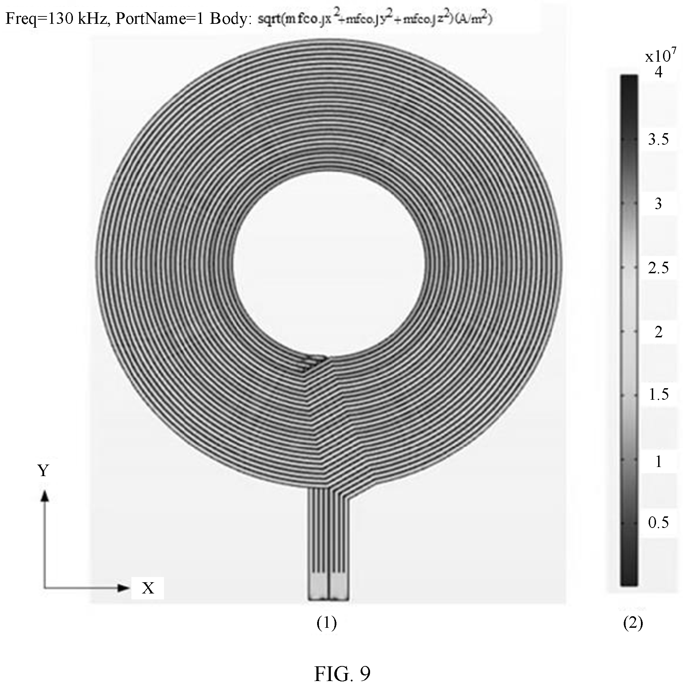

A current density distribution test is performed on the coil module in this example. A test result is shown in FIG. 9. (1) in FIG. 9 shows current density distribution of the coil module 30, and a color corresponding to each position in the coil module 30 represents a current value. (2) in FIG. 9 shows a correspondence between a color and a current value, that is, a current value at each position in (1) in FIG. 9 is determined based on the color at each position in (1) in FIG. 9 and the correspondence between the color and the current value provided in (2) in FIG. 9.

As shown in FIG. 9, it is found from the current density distribution test result that colors corresponding to all the positions in the coil module 30 are relatively uniform, and a difference between the colors corresponding to all the positions is relatively small, that is, consistency between the colors corresponding to all the positions is relatively good. Therefore, it may be learned that according to the coil module in this example, there is a current at each position, and the current density distribution is relatively uniform. This facilitates high-power wireless charging.

In conclusion, the coil module provided in this example can be used to implement that the wireless charging receiving device has both a high-power charging effect and a thin and lightweight effect.

To better describe the effect, a simulation test is performed on the coil module provided in this embodiment of this application. A simulation test result is shown in Table 3. In Table 3, an offset is an offset distance between the center of the transmit coil and the center of the receive coil, and positive and negative values may respectively represent a leftward offset and a rightward offset of the center of the receive coil relative to the center of the transmit coil; target power is charging efficiency in cases of different loads; an input voltage and an input current are a voltage and a current provided by a wireless charging sending device side; an output voltage and an output current are a voltage and a current generated by a wireless charging receiving device side based on the voltage and the current provided by the wireless charging sending device side; input power is a product of the input voltage and the input current; output power is a product of the output voltage and the output current; and efficiency is a ratio of the output power to the input power.

**Table 3 Charging efficiency in cases of different offsets**

| Offset/mm | Target power | Input voltage/V | Input current/A | Output voltage/V | Output current/A | Input power/W | Output power/W | Efficiency |
|---|---|---|---|---|---|---|---|---|
| X=0 | 10 W | 19.872 | 0.765 | 8.964 | 1.2 | 15.202 | 10.757 | 70.76% |
| | 20 W | 19.776 | 1.354 | 8.942 | 2.2 | 26.776 | 19.672 | 73.47% |
| | 30 W | 19.653 | 2.105 | 8.904 | 3.3 | 41.369 | 29.383 | 71.03% |
| X=4 | 10 W | 19.748 | 0.774 | 8.964 | 1.2 | 15.285 | 10.757 | 70.37% |
| | 20 W | 19.552 | 1.382 | 8.954 | 2.2 | 27.020 | 19.699 | 72.90% |
| | 30 W | 19.350 | 2.147 | 8.905 | 3.3 | 41.545 | 29.387 | 70.73% |
| X=8 | 10 W | 19.724 | 0.847 | 8.964 | 1.2 | 16.707 | 10.757 | 64.39% |
| | 20 W | 19.546 | 1.463 | 8.945 | 2.2 | 28.595 | 19.679 | 68.82% |
| | 30 W | 19.379 | 2.252 | 8.910 | 3.3 | 43.642 | 29.403 | 67.37% |
| X=10 | 10 W | 19.718 | 0.906 | 8.965 | 1.2 | 17.864 | 10.758 | 60.22% |
| | 20 W | 19.546 | 1.604 | 8.947 | 2.2 | 31.351 | 19.683 | 62.78% |
| | 30 W | 19.368 | 2.485 | 8.902 | 3.3 | 48.129 | 29.377 | 61.04% |
| X=-4 | 10 W | 19.732 | 0.779 | 8.965 | 1.2 | 15.371 | 10.758 | 69.99% |
| | 20 W | 19.496 | 1.393 | 8.957 | 2.2 | 27.158 | 19.705 | 72.56% |
| | 30 W | 19.292 | 2.161 | 8.899 | 3.3 | 41.690 | 29.367 | 70.44% |
| X=-8 | 10 W | 19.739 | 0.852 | 8.964 | 1.2 | 16.818 | 10.757 | 63.96% |
| | 20 W | 19.569 | 1.457 | 8.948 | 2.2 | 28.512 | 19.686 | 69.04% |
| | 30 W | 19.421 | 2.317 | 8.945 | 3.3 | 44.998 | 29.519 | 65.60% |

It may be learned from Table 3 that the ultra-thin coil module provided in this embodiment of this application can support high-power wireless charging of 30 W.

Example 2: Still with reference to FIG. 4 and FIG. 5C, the inner coil diameter d1 is 20 mm, the outer coil diameter d2 is 48 mm, N is 7, and M is 3. That is, in a limited region defined by the outer coil diameter d2 of 48 mm and the inner coil diameter d1 of 20 mm, the coil structure 31 uses a 7-turn, 3-strand parallel winding solution. The magnetically conductive sublayer 322 includes two layers of nanocrystals 3221 (a thickness of each layer of nanocrystal 3221 is 17 µm), and a material characteristic of the nanocrystal meets the following: Saturation magnetic flux density of the nanocrystal is 1.4 T, and relative magnetic permeability of the nanocrystal is 3000 times that of air (that is, µ'3000).

Electrical parameters in this example are shown in Table 4. In Table 4, L is inductance of the coil module, Q is a quality factor of the coil module, ARC is alternating current impedance of the coil module, and DRC is direct current impedance of the coil module.

**Table 4**

| Frequency | L/uH | Q | ARC/mΩ | Saturation current/A | DRC/mΩ | Self-resonant frequency/Mhz |
|---|---|---|---|---|---|---|
| 100 KHZ | 3.31448 | 5.09387 | 408.835 | 5.4174 | 385.126 | 7.8173 |
| 130 KHZ | 3.31238 | 6.38634 | 423.653 | 5.4174 | | |
| 145 KHZ | 3.31096 | 6.97242 | 432.411 | 5.4981 | | |
| Thickness | 0.102 mm | | | | | |

It may be learned from Table 4 that at different electromagnetic wave frequencies, the inductance L of the coil module changes. The alternating current impedance ARC increases with the frequency, but both the alternating current impedance ARC and the direct current impedance DRC are relatively low. In addition, the coil module in this example has a relatively good quality factor Q. In addition, the self-resonant frequency of the coil module in this example is 7.8173 Mhz, which is far different from a working frequency (100 KHZ, 130 KHZ, 145 KHZ, or the like) of the coil module. This does not affect wireless charging. That is, the coil module provided in this example has relatively low impedance and relatively proper inductance in a case of a very small thickness (for example, the thickness of 0.102 mm).

The seven coil groups 31a are a first coil group, a second coil group, a third coil group, a fourth coil group, a fifth coil group, a sixth coil group, and a seventh coil group from an inner position to an outer position. Widths of the first coil group and the second coil group are the same, widths of the fifth coil group and the sixth coil group are the same, and widths of the first coil group, the third coil group, the fourth coil group, the fifth coil group, and the seventh coil group gradually increase. A line design of the seven coil groups 31a is specifically shown in Table 5. A wire spacing between the three strands of wires 311a in each coil group 31a is 0.06 mm. It may be understood that the wire spacing is related to a process level, and a smaller wire spacing indicates a better process level.

**Table 5**

| Coil group | Outer diameter/mm | Inner diameter/mm | Quantity of strands | Line width per strand/mm | Line width per turn/mm |
|---|---|---|---|---|---|
| Seventh coil group | 24 | 23.34 | 3 | 0.66 | 1.94 |
| | 23.28 | 22.64 | | 0.64 | |
| | 22.58 | 21.94 | | 0.64 | |
| Sixth coil group | 21.88 | 21.24 | 3 | 0.64 | 1.92 |
| | 21.18 | 20.54 | | 0.64 | |
| | 20.48 | 19.84 | | 0.64 | |
| Fifth coil group | 19.78 | 19.14 | 3 | 0.64 | 1.92 |
| | 19.08 | 18.44 | | 0.64 | |
| | 18.38 | 17.74 | | 0.64 | |
| Fourth coil group | 17.68 | 17.06 | 3 | 0.62 | 1.86 |
| | 17 | 16.38 | | 0.62 | |
| | 16.32 | 15.7 | | 0.62 | |
| Third coil group | 15.64 | 15.04 | 3 | 0.6 | 1.8 |
| | 14.98 | 14.38 | | 0.6 | |
| | 14.32 | 13.72 | | 0.6 | |
| Second coil group | 13.66 | 13.1 | 3 | 0.56 | 1.68 |
| | 13.04 | 12.48 | | 0.56 | |
| | 12.42 | 11.86 | | 0.56 | |
| First coil group | 11.8 | 11.24 | 3 | 0.56 | 1.68 |
| | 11.18 | 10.62 | | 0.56 | |
| | 10.56 | 10 | | 0.56 | |
| Total width of the copper sheet | | | | | 12.8 |

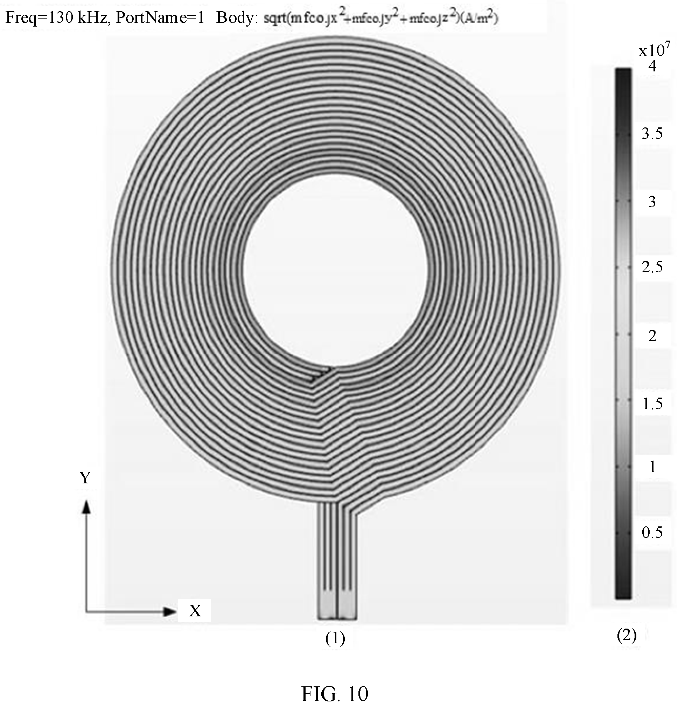

A current density distribution test is performed on the coil module in this example. A test result is shown in FIG. 10. (1) in FIG. 10 shows current density distribution of the coil module 30, and a color corresponding to each position in the coil module 30 represents a current value. (2) in FIG. 10 shows a correspondence between a color and a current value, that is, a current value at each position in (1) in FIG. 10 is determined based on the color at each position in (1) in FIG. 10 and the correspondence between the color and the current value provided in (2) in FIG. 10.

As shown in FIG. 10, it is found from the current density distribution test result that colors corresponding to all the positions in the coil module 30 are relatively uniform, and a difference between the colors corresponding to all the positions is relatively small, that is, consistency between the colors corresponding to all the positions is relatively good. Therefore, it may be learned that according to the coil module in this example, there is a current at each position, and the current density distribution is relatively uniform. This facilitates high-power wireless charging.

In conclusion, the coil module provided in this example can be used to implement that the wireless charging receiving device has both a high-power charging effect and a thin and lightweight effect.

To better describe the effect, a simulation test is performed on the coil module provided in this embodiment of this application. A simulation test result is shown in Table 6. In Table 6, an offset is an offset distance between the center of the transmit coil and the center of the receive coil, and positive and negative values may respectively represent a leftward offset and a rightward offset of the center of the receive coil relative to the center of the transmit coil; target power is charging efficiency in cases of different loads; an input voltage and an input current are a voltage and a current provided by a wireless charging sending device side; an output voltage and an output current are a voltage and a current generated by a wireless charging receiving device side based on the voltage and the current provided by the wireless charging sending device side; input power is a product of the input voltage and the input current; output power is a product of the output voltage and the output current; and efficiency is a ratio of the output power to the input power.

**Table 6 Charging efficiency in cases of different offsets**

| Offset/mm | Target power | Input voltage/V | Input current/A | Output voltage/V | Output current/A | Input power/W | Output power/W | Efficiency |
|---|---|---|---|---|---|---|---|---|
| X=0 | 10 W | 19.787 | 0.782 | 8.962 | 1.2 | 15.473 | 10.754 | 69.50% |
| | 20 W | 19.637 | 1.398 | 8.955 | 2.2 | 27.453 | 19.701 | 71.76% |
| | 30 W | 19.461 | 2.182 | 8.901 | 3.3 | 42.463 | 29.373 | 69.17% |
| X=4 | 10 W | 19.794 | 0.786 | 8.963 | 1.2 | 15.558 | 10.756 | 69.13% |
| | 20 W | 19.635 | 1.412 | 8.943 | 2.2 | 27.725 | 19.675 | 70.96% |
| | 30 W | 19.445 | 2.207 | 8.909 | 3.3 | 42.916 | 29.400 | 68.51% |
| X=8 | 10 W | 19.786 | 0.843 | 8.963 | 1.2 | 16.679 | 10.756 | 64.48% |
| | 20 W | 19.647 | 1.486 | 8.955 | 2.2 | 29.195 | 19.701 | 67.48% |
| | 30 W | 19.475 | 2.363 | 8.944 | 3.3 | 46.020 | 29.515 | 64.14% |
| X=10 | 10 W | 19.683 | 0.912 | 8.962 | 1.2 | 17.951 | 10.754 | 59.91% |
| | 20 W | 19.526 | 1.654 | 8.951 | 2.2 | 32.295 | 19.692 | 60.98% |
| | 30 W | 19.381 | 2.595 | 8.914 | 3.3 | 50.294 | 29.416 | 58.49% |
| X=-4 | 10 W | 19.761 | 0.783 | 8.963 | 1.2 | 15.473 | 10.756 | 69.51% |
| | 20 W | 19.581 | 1.408 | 8.948 | 2.2 | 27.570 | 19.686 | 71.40% |
| | 30 W | 19.428 | 2.211 | 8.911 | 3.3 | 42.956 | 29.406 | 68.46% |
| X=-8 | 10 W | 19.704 | 0.834 | 8.963 | 1.2 | 16.433 | 10.756 | 65.45% |
| | 20 W | 19.514 | 1.470 | 8.942 | 2.2 | 28.685 | 19.672 | 68.58% |
| | 30 W | 19.370 | 2.325 | 8.906 | 3.3 | 45.036 | 29.390 | 65.26% |

It may be learned from Table 6 that the ultra-thin coil module provided in this embodiment of this application can support high-power wireless charging of 30 W.

Example 3: Still with reference to FIG. 4 and FIG. 6, the inner coil diameter d1 is 20 mm, the outer coil diameter d2 is 48 mm, N is 8, and M is 3. That is, in a limited region defined by the outer coil diameter d2 of 48 mm and the inner coil diameter d1 of 20 mm, the coil structure 31 uses an 8-turn, 3-strand parallel winding solution. The magnetically conductive sublayer 322 includes two layers of nanocrystals 3221 (a thickness of each layer of nanocrystal 3221 is 17 µm), and a material characteristic of the nanocrystal meets the following: Saturation magnetic flux density of the nanocrystal is 1.4 T, and relative magnetic permeability of the nanocrystal is 3000 times that of air (that is, µ'3000).

Electrical parameters in this example are shown in Table 7. In Table 7, L is inductance of the coil module, Q is a quality factor of the coil module, ARC is alternating current impedance of the coil module, and DRC is direct current impedance of the coil module.

**Table 7**

| Frequency | L/uH | Q | ARC/mΩ | Saturation current/A | DRC/mΩ | Self-resonant frequency/Mhz |
|---|---|---|---|---|---|---|
| 100 KHZ | 4.39824 | 5.96129 | 463.573 | 4.1295 | 434.352 | 7.8172 |
| 130 KHZ | 4.39605 | 7.45804 | 480.921 | 4.5435 | | |
| 145 KHZ | 4.39465 | 8.13996 | 491.87 | 4.7001 | | |
| Thickness | 0.109 mm | | | | | |

It may be learned from Table 7 that at different electromagnetic wave frequencies, the inductance L of the coil module changes. The alternating current impedance ARC increases with the frequency, but both the alternating current impedance ARC and the direct current impedance DRC are relatively low. In addition, the coil module in this example has a relatively good quality factor Q. In addition, the self-resonant frequency of the coil module in this example is 7.8172 Mhz, which is far different from a working frequency (100 KHZ, 130 KHZ, 145 KHZ, or the like) of the coil module. This does not affect wireless charging. That is, the coil module provided in this example has relatively low impedance and relatively proper inductance in a case of a very small thickness (for example, the thickness of 0.109 mm). This facilitates high-power wireless charging.

The eight coil groups 31a are a first coil group, a second coil group, a third coil group, a fourth coil group, a fifth coil group, a sixth coil group, a seventh coil group, and an eighth coil group from an inner position to an outer position. Widths of the first coil group, the second coil group, the third coil group, and the fourth coil group are the same, widths of the fifth coil group, the sixth coil group, and the seventh coil group are the same, and widths of the first coil group, the fifth coil group, and the eighth coil group gradually increase. A line design of the eight coil groups 31a is specifically shown in Table 8. A wire spacing between the three strands of wires 311a in each coil group 31a is 0.06 mm. It may be understood that the wire spacing is related to a process level, and a smaller wire spacing indicates a better process level.

**Table 8**

| Coil group | Outer diameter/mm | Inner diameter/mm | Quantity of strands | Line width per strand/mm | Line width per turn/mm |
|---|---|---|---|---|---|
| Eighth coil group | 24 | 23.44 | 3 | 0.56 | 1.67 |
| | 23.38 | 22.82 | | 0.56 | |
| | 22.76 | 22.21 | | 0.55 | |
| Seventh coil group | 22.15 | 21.6 | 3 | 0.55 | 1.65 |
| | 21.54 | 20.99 | | 0.55 | |
| | 20.93 | 20.38 | | 0.55 | |
| Sixth coil group | 20.32 | 19.77 | 3 | 0.55 | 1.65 |
| | 19.71 | 19.16 | | 0.55 | |
| | 19.1 | 18.55 | | 0.55 | |
| Fifth coil group | 18.49 | 17.94 | 3 | 0.55 | 1.65 |
| | 17.88 | 17.33 | | 0.55 | |
| | 17.27 | 16.72 | | 0.55 | |
| Fourth coil group | 16.66 | 16.16 | 3 | 0.5 | 1.5 |
| | 16.1 | 15.6 | | 0.5 | |
| | 15.54 | 15.04 | | 0.5 | |
| Third coil group | 14.98 | 14.48 | 3 | 0.5 | 1.5 |
| | 14.42 | 13.92 | | 0.5 | |
| | 13.86 | 13.36 | | 0.5 | |
| Second coil group | 13.3 | 12.8 | 3 | 0.5 | 1.5 |
| | 12.74 | 12.24 | | 0.5 | |
| | 12.18 | 11.68 | | 0.5 | |
| First coil group | 11.62 | 11.12 | 3 | 0.5 | 1.5 |
| | 11.06 | 10.56 | | 0.5 | |
| | 10.5 | 10 | | 0.5 | |
| Total width of the copper sheet | | | | | 12.62 |

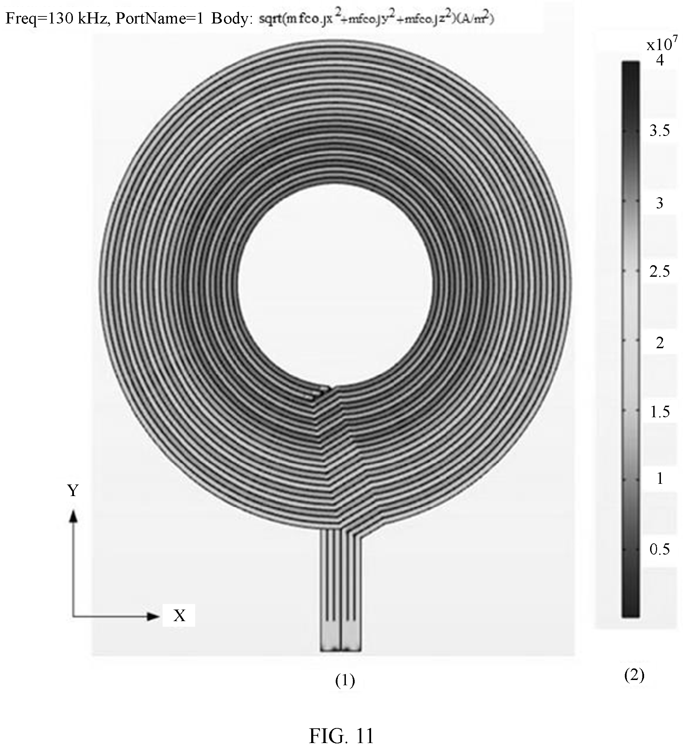

A current density distribution test is performed on the coil module in this example. A test result is shown in FIG. 11. (1) in FIG. 11 shows current density distribution of the coil module 30, and a color corresponding to each position in the coil module 30 represents a current value. (2) in FIG. 11 shows a correspondence between a color and a current value, that is, a current value at each position in (1) in FIG. 11 is determined based on the color at each position in (1) in FIG. 11 and the correspondence between the color and the current value provided in (2) in FIG. 11.

As shown in FIG. 11, it is found from the current density distribution test result that colors corresponding to all the positions in the coil module 30 are relatively uniform, and a difference between the colors corresponding to all the positions is relatively small, that is, consistency between the colors corresponding to all the positions is relatively good. Therefore, it may be learned that according to the coil module in this example, there is a current at each position, and the current density distribution is relatively uniform. This facilitates high-power wireless charging.

In conclusion, the coil module provided in this example can be used to implement that the wireless charging receiving device has both a high-power charging effect and a thin and lightweight effect.

To better describe the effect, a simulation test is performed on the coil module provided in this embodiment of this application. A simulation test result is shown in Table 9. In Table 9, an offset is an offset distance between the center of the transmit coil and the center of the receive coil, and positive and negative values may respectively represent a leftward offset and a rightward offset of the center of the receive coil relative to the center of the transmit coil; target power is charging efficiency in cases of different loads; an input voltage and an input current are a voltage and a current provided by a wireless charging sending device side; an output voltage and an output current are a voltage and a current generated by a wireless charging receiving device side based on the voltage and the current provided by the wireless charging sending device side; input power is a product of the input voltage and the input current; output power is a product of the output voltage and the output current; and efficiency is a ratio of the output power to the input power.

**Table 9 Charging efficiency in cases of different offsets**

| Offset/mm | Target power | Input voltage/V | Input current/A | Output voltage/V | Output current/A | Input power/W | Output power/W | Efficiency |
|---|---|---|---|---|---|---|---|---|
| X=0 | 10 W | 19.830 | 0.753 | 8.963 | 1.2 | 14.932 | 10.756 | 72.03% |
| | 20 W | 19.692 | 1.406 | 8.953 | 2.2 | 27.687 | 19.697 | 71.14% |
| | 30 W | 19.517 | 2.226 | 8.904 | 3.3 | 43.445 | 29.383 | 67.63% |
| X=4 | 10 W | 19.881 | 0.764 | 8.963 | 1.2 | 15.189 | 10.756 | 70.81% |
| | 20 W | 19.631 | 1.405 | 8.943 | 2.2 | 27.581 | 19.675 | 71.33% |
| | 30 W | 19.444 | 2.245 | 8.891 | 3.3 | 43.652 | 29.340 | 67.21% |
| X=8 | 10 W | 19.809 | 0.819 | 8.964 | 1.2 | 16.224 | 10.757 | 66.30% |
| | 20 W | 19.649 | 1.476 | 8.943 | 2.2 | 29.003 | 19.675 | 67.84% |
| | 30 W | 19.445 | 2.340 | 8.906 | 3.3 | 45.501 | 29.390 | 64.59% |
| X=10 | 10 W | 19.768 | 0.954 | 8.964 | 1.2 | 18.858 | 10.757 | 57.04% |
| | 20 W | 19.569 | 1.714 | 8.943 | 2.2 | 33.542 | 19.675 | 58.66% |
| | 30 W | 19.299 | 2.768 | 8.903 | 3.3 | 53.421 | 29.380 | 55.00% |
| X=-4 | 10 W | 19.834 | 0.774 | 8.964 | 1.2 | 15.351 | 10.757 | 70.07% |
| | 20 W | 19.693 | 1.413 | 8.955 | 2.2 | 27.826 | 19.701 | 70.80% |
| | 30 W | 19.482 | 2.270 | 8.944 | 3.3 | 44.224 | 29.515 | 66.74% |
| X=-8 | 10 W | 19.814 | 0.816 | 8.963 | 1.2 | 16.168 | 10.756 | 66.52% |
| | 20 W | 19.657 | 1.486 | 8.950 | 2.2 | 29.210 | 19.690 | 67.41% |
| | 30 W | 19.452 | 2.338 | 8.911 | 3.3 | 45.480 | 29.406 | 64.66% |

It may be learned from Table 9 that the ultra-thin coil module provided in this embodiment of this application can support high-power wireless charging of 30 W.

Example 4: Still with reference to FIG. 4 and FIG. 8, the inner coil diameter d1 is 20 mm, the outer coil diameter d2 is 48 mm, N is 8, and M is 3. That is, in a limited region defined by the outer coil diameter d2 of 48 mm and the inner coil diameter d1 of 20 mm, the coil structure 31 uses an 8-turn, 3-strand parallel winding solution. The magnetically conductive sublayer 322 includes two layers of nanocrystals 3221 (a thickness of each layer of nanocrystal 3221 is 17 µm), and a material characteristic of the nanocrystal meets the following: Saturation magnetic flux density of the nanocrystal is 1.4 T, and relative magnetic permeability of the nanocrystal is 3000 times that of air (that is, µ'3000). It should be noted that thicknesses of the wiring sublayer in the example 1 and the example 3 are the same, for example, 18 µm, thicknesses of the wiring sublayer in the example 2 and the example 4 are the same, for example, 12 µm, and thicknesses of other film layers in the example 1, the example 2, the example 3, and the example 4 are the same.

Electrical parameters in this example are shown in Table 10. In Table 10, L is inductance of the coil module, Q is a quality factor of the coil module, ARC is alternating current impedance of the coil module, and DRC is direct current impedance of the coil module.

**Table 10**

| Frequency | L/uH | Q | ARC/mΩ | Saturation current/A | DRC/mΩ | Self-resonant frequency/Mhz |
|---|---|---|---|---|---|---|
| 100 KHZ | 4.39824 | 5.96129 | 463.573 | 4.1295 | 434.352 | 7.8172 |
| 130 KHZ | 4.39605 | 7.45804 | 480.921 | 4.5435 | | |
| 145 KHZ | 4.39465 | 8.13996 | 491.87 | 4.7001 | | |
| Thickness | 0.109 mm | | | | | |

It may be learned from Table 10 that at different electromagnetic wave frequencies, the inductance L of the coil module changes. The alternating current impedance ARC increases with the frequency, but both the alternating current impedance ARC and the direct current impedance DRC are relatively low. In addition, the coil module in this example has a relatively good quality factor Q. In addition, the self-resonant frequency of the coil module in this example is 7.8172 Mhz, which is far different from a working frequency (100 KHZ, 130 KHZ, 145 KHZ, or the like) of the coil module. This does not affect wireless charging. That is, the coil module provided in this example has relatively low impedance and relatively proper inductance in a case of a very small thickness (for example, the thickness of 0.109 mm). This facilitates high-power wireless charging.

The eight coil groups 31a are a first coil group, a second coil group, a third coil group, a fourth coil group, a fifth coil group, a sixth coil group, a seventh coil group, and an eighth coil group from an inner position to an outer position. Widths of the first coil group, the second coil group, the third coil group, and the fourth coil group are the same, widths of the fifth coil group, the sixth coil group, and the seventh coil group are the same, and widths of the first coil group, the fifth coil group, and the eighth coil group gradually increase. A line design of the eight coil groups 31a is specifically shown in Table 11. A wire spacing between the three strands of wires 311a in each coil group 31a is 0.06 mm. It may be understood that the wire spacing is related to a process level, and a smaller wire spacing indicates a better process level.

**Table 11**

| Coil group | Outer diameter/mm | Inner diameter/mm | Quantity of strands | Line width per strand/mm | Line width per turn/mm |
|---|---|---|---|---|---|
| Eighth coil group | 24 | 23.44 | 3 | 0.56 | 1.67 |
| | 23.38 | 22.82 | | 0.56 | |
| | 22.76 | 22.21 | | 0.55 | |
| Seventh coil group | 22.15 | 21.6 | 3 | 0.55 | 1.65 |
| | 21.54 | 20.99 | | 0.55 | |
| | 20.93 | 20.38 | | 0.55 | |
| Sixth coil group | 20.32 | 19.77 | 3 | 0.55 | 1.65 |
| | 19.71 | 19.16 | | 0.55 | |
| | 19.1 | 18.55 | | 0.55 | |
| Fifth coil group | 18.49 | 17.94 | 3 | 0.55 | 1.65 |
| | 17.88 | 17.33 | | 0.55 | |
| | 17.27 | 16.72 | | 0.55 | |
| Fourth coil group | 16.66 | 16.16 | 3 | 0.5 | 1.5 |
| | 16.1 | 15.6 | | 0.5 | |
| | 15.54 | 15.04 | | 0.5 | |
| Third coil group | 14.98 | 14.48 | 3 | 0.5 | 1.5 |
| | 14.42 | 13.92 | | 0.5 | |
| | 13.86 | 13.36 | | 0.5 | |
| Second coil group | 13.3 | 12.8 | 3 | 0.5 | 1.5 |
| | 12.74 | 12.24 | | 0.5 | |
| | 12.18 | 11.68 | | 0.5 | |
| First coil group | 11.62 | 11.12 | 3 | 0.5 | 1.5 |
| | 11.06 | 10.56 | | 0.5 | |
| | 10.5 | 10 | | 0.5 | |
| Total width of the copper sheet | | | | | 12.62 |

In conclusion, the coil module provided in this example can be used to implement that the wireless charging receiving device has both a high-power charging effect and a thin and lightweight effect.

To better describe the effect, a simulation test is performed on the coil module provided in this embodiment of this application. A simulation test result is shown in Table 12. In Table 12, an offset is an offset distance between the center of the transmit coil and the center of the receive coil, and positive and negative values may respectively represent a leftward offset and a rightward offset of the center of the receive coil relative to the center of the transmit coil; target power is charging efficiency in cases of different loads; an input voltage and an input current are a voltage and a current provided by a wireless charging sending device side; an output voltage and an output current are a voltage and a current generated by a wireless charging receiving device side based on the voltage and the current provided by the wireless charging sending device side; input power is a product of the input voltage and the input current; output power is a product of the output voltage and the output current; and efficiency is a ratio of the output power to the input power.

**Table 12 Charging efficiency in cases of different offsets**

| Offset/mm | Target power | Input voltage/V | Input current/A | Output voltage/V | Output current/A | Input power/W | Output power/W | Efficiency |
|---|---|---|---|---|---|---|---|---|
| X=0 | 10 W | 19.821 | 0.766 | 8.960 | 1.2 | 15.183 | 10.752 | 70.82% |
| | 20 W | 19.636 | 1.443 | 8.953 | 2.2 | 28.334 | 19.697 | 69.52% |
| | 30 W | 19.461 | 2.336 | 8.902 | 3.3 | 45.461 | 29.377 | 64.62% |
| X=4 | 10 W | 19.820 | 0.778 | 8.963 | 1.2 | 15.420 | 10.756 | 69.75% |
| | 20 W | 19.662 | 1.452 | 8.943 | 2.2 | 28.550 | 19.675 | 68.91% |
| | 30 W | 19.461 | 2.359 | 8.902 | 3.3 | 45.908 | 29.377 | 63.99% |
| X=8 | 10 W | 19.817 | 0.829 | 8.963 | 1.2 | 16.429 | 10.756 | 65.47% |
| | 20 W | 19.661 | 1.531 | 8.953 | 2.2 | 30.101 | 19.697 | 65.43% |
| | 30 W | 19.462 | 2.436 | 8.911 | 3.3 | 47.409 | 29.406 | 62.03% |
| X=12 | 10 W | 19.730 | 1.003 | 8.964 | 1.2 | 19.793 | 10.757 | 54.35% |
| | 20 W | 19.522 | 1.863 | 8.947 | 2.2 | 36.370 | 19.683 | 54.12% |
| | 30 W | 19.302 | 3.068 | 8.908 | 3.3 | 59.219 | 29.396 | 49.64% |
| X=-4 | 10 W | 19.804 | 0.796 | 8.965 | 1.2 | 15.764 | 10.758 | 68.25% |
| | 20 W | 19.634 | 1.456 | 8.940 | 2.2 | 28.587 | 19.668 | 68.80% |
| | 30 W | 19.378 | 2.375 | 8.904 | 3.3 | 46.022 | 29.383 | 63.85% |
| X=-8 | 10 W | 19.763 | 0.852 | 8.963 | 1.2 | 16.838 | 10.756 | 63.88% |
| | 20 W | 19.561 | 1.574 | 8.955 | 2.2 | 30.789 | 19.701 | 63.99% |
| | 30 W | 19.255 | 2.541 | 8.912 | 3.3 | 48.927 | 29.410 | 60.11% |
| X=-10 | 10 W | 19.756 | 0.904 | 8.963 | 1.2 | 17.860 | 10.756 | 60.22% |
| | 20 W | 19.571 | 1.623 | 8.944 | 2.2 | 31.763 | 19.677 | 61.95% |
| | 30 W | 19.346 | 2.705 | 8.944 | 3.3 | 52.331 | 29.515 | 56.40% |

It may be learned from Table 12 that the ultra-thin coil module provided in this embodiment of this application can support high-power wireless charging of 30 W.

It may be learned from the four examples that the ultra-thin coil module provided in this application can support high-power wireless charging of 30 W.

### Embodiment 2

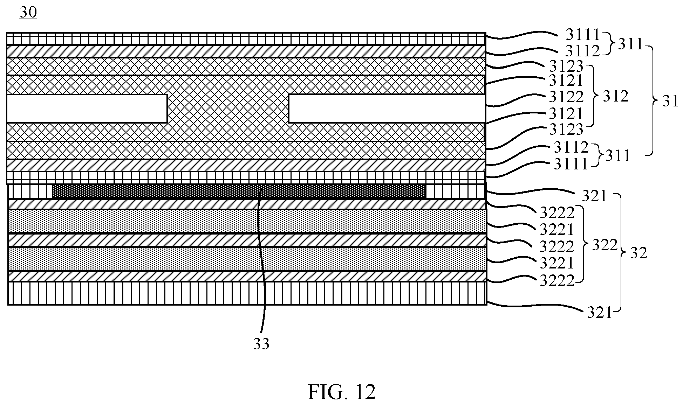

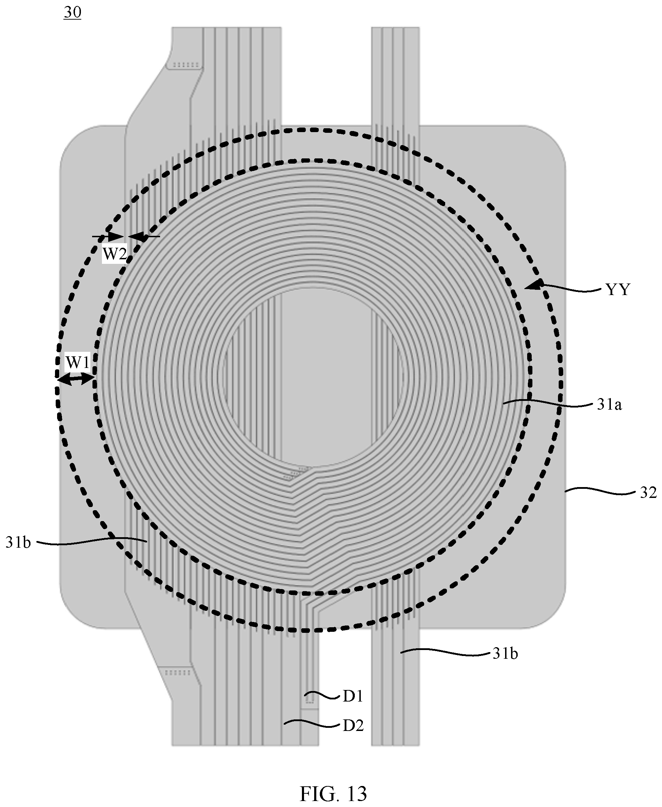

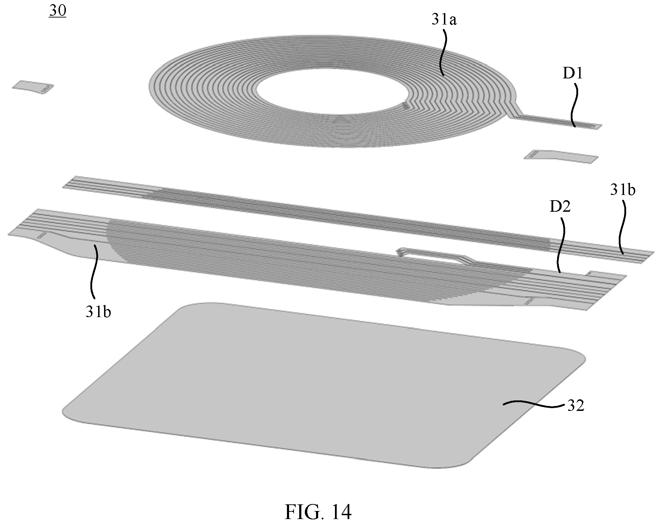

Refer to FIG. 12, FIG. 13, and FIG. 14. FIG. 12 is a diagram of a film layer in a coil module according to Embodiment 2 of this application. FIG. 13 is a plan view of a coil module according to Embodiment 2 of this application. FIG. 14 is an exploded view of the coil module shown in FIG. 13. As shown in FIG. 12, FIG. 13, and FIG. 14, a difference from Embodiment 1 is that a magnetically conductive layer 32 in Embodiment 2 is located on a side of a coil structure 31, and no hollowed-out portion 32a is disposed on the magnetically conductive layer 32. Correspondingly, a second wiring sublayer in which a second end D2 of the coil structure 31 is disposed is located between a first wiring sublayer and the magnetically conductive layer 32. In this embodiment, the coil structure 31 further includes at least one flexible circuit board unit 31b. Both the flexible circuit board unit 31b and the second end D2 of the coil structure 31 are located in the second wiring sublayer. The flexible circuit board unit 31b is located in a preset region in the second wiring sublayer, and the preset region is a region that is in the second wiring sublayer and in which the second end D2 is not disposed.

It should be noted that unless otherwise specified, a specific structure of the coil module 30 in this embodiment of this application (for example, a thickness of each film layer, a quantity of coil groups 31a, a quantity of strands, and a width design) is the same as that in Embodiment 1. For details, refer to Embodiment 1. Details are not described herein.

That is, when the coil module is disposed in an electronic device, the flexible circuit board in the electronic device may be disposed in the second wiring sublayer, that is, the coil module includes both a wireless charging coil and the flexible circuit board in the electronic device. In this way, occupation of internal space of the electronic device by another flexible circuit board is avoided, to help dispose another structure and reduce a process step.

It may be learned from the foregoing content that a main board 2041 and a sub-board 2042 may be connected through an FPC. Therefore, in an example, the FPC unit connecting the main board 2041 to the sub-board 2042 may be disposed in the preset region in the second wiring sublayer. In this way, the FPC connecting the main board 2041 to the sub-board 2042 does not need to be separately disposed in an accommodation cavity of the electronic device, to avoid occupation of internal space of the electronic device by the FPC, to help dispose another structure. In addition, the FPC is formed when the second end D2 is formed, to reduce a process step.

The NFC coil may be formed by winding an FPC trace. Therefore, in another example, the NFC coil may be disposed in the preset region in the second wiring sublayer. In this way, the NFC coil does not need to be separately disposed in an accommodation cavity of the electronic device, to avoid occupation of internal space of the electronic device by the NFC coil, to help dispose another structure. In addition, the NFC coil is formed when the second end D2 is formed, to reduce a process step.

In addition, a functional component such as a wireless charging coil (for example, a receive coil L2), a speaker, or a SIM card is connected to the main board 2041 or the sub-board 2042 through the FPC. Therefore, in still another example, the FPC connecting the functional component to the main board 2041 or the sub-board 2042 may be disposed in the preset region in the second wiring sublayer. In this way, the FPC connecting the functional component to the main board 2041 or the sub-board 2042 does not need to be separately disposed in an accommodation cavity of the electronic device, to avoid occupation of internal space of the electronic device by the FPC, to help dispose another structure. In addition, the FPC is formed when the second end D2 is formed, to reduce a process step.

It should be noted that the foregoing example is merely described by using an example in which a line of the FPC or the NFC coil connecting the main board 2041 to the sub-board 2042 or the FPC connecting the functional component (for example, the wireless charging coil, the speaker, or the SIM card) to the main board 2041 or the sub-board 2042 is disposed in the second wiring sublayer. However, this does not constitute a limitation on this application. When a working requirement of each functional component is met, all other FPCs in the electronic device may be disposed in the preset region in the second wiring sublayer.

In some embodiments, the preset region includes a first sub-region YY, and the first sub-region YY is a region (for example, a ring-shaped region enclosed by an inner ring-shaped dashed line and an outer ring-shaped dashed line in FIG. 13) formed by outwardly extending a projection of an outermost coil group on the second wiring sublayer by a first preset length W1 in all directions. When a line width W2 of the flexible circuit board unit 31b in the first sub-region YY is greater than a second preset length, a trace of the flexible circuit board unit 31b in the first sub-region YY is cut into a plurality of lines. That is, a relatively wide trace of the flexible circuit board unit 31b in the first sub-region YY is cut into a plurality of thin lines, to avoid generation of an excessively high eddy current loss on the relatively wide trace.

For example, the first preset length may be 5 mm. The second preset length may be 8 mm. That is, a trace whose line width is greater than 8 mm is avoided at least within a 5 mm outward extension range of a maximum outer coil outline. A relatively wide trace within the range may be cut into strands and finer line width control indicates a better effect.

It may be learned from the foregoing two embodiments that the plurality of coil groups that occupy a relatively large area are disposed in the first wire sublayer, and the second wiring sublayer includes only the second end that occupies a relatively small area. In this way, when the coil module is disposed in an electronic device, another trace of the electronic device may be disposed on the second wiring sublayer, to avoid occupation of internal space of the electronic device by the another trace, and help dispose another structure. Alternatively, because the second wiring sublayer includes only the second end that occupies a relatively small area, the second end that occupies a relatively small area may be built into another structure, so that the coil module occupies a relatively small amount of internal space of the electronic device, to help dispose another structure.

As described above, the foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A coil module, comprising a coil structure, wherein
the coil structure comprises a functional layer, and in a thickness direction of the coil structure, the functional layer comprises a first wiring sublayer, a second wiring sublayer, and an insulation sublayer located between the first wiring sublayer and the second wiring sublayer;
the coil structure comprises a first end, a second end, and a plurality of coil groups sequentially connected in series, the first end and the plurality of coil groups are disposed in the first wiring sublayer, and an outermost coil group is connected to the first end; and
the second end is disposed in the second wiring sublayer; a via hole is disposed in the insulation sublayer, and a connection structure is disposed in the via hole; and an innermost coil group is connected to the second end through the connection structure in the insulation sublayer, so that the first end is electrically connected to the second end through the plurality of coil groups sequentially connected in series.

2. The coil module according to claim 1, wherein the coil module further comprises a magnetically conductive layer; and the magnetically conductive layer comprises a hollowed-out portion, and the second end is disposed in the hollowed-out portion.

3. The coil module according to claim 2, wherein in the thickness direction of the coil structure, the magnetically conductive layer comprises a first protective sublayer, a second protective sublayer, and a magnetically conductive sublayer located between the first protective sublayer and the second protective sublayer, and the magnetically conductive sublayer comprises a plurality of layers of adhesive and a nanocrystal located between two adjacent layers of adhesive; and the first protective sublayer is disposed adjacent to the coil structure, and adhesive disposed adjacent to the second protective sublayer is first adhesive;
a first hole is disposed in a film layer in which the first protective sublayer, other adhesive different from the first adhesive, and the nanocrystal are located, a second hole is disposed in a film layer in which the first adhesive and the second protective sublayer are located, and the first hole and the second hole form the hollowed-out portion; and
a projection of the second hole on a reference plane is within a projection of the first hole on the reference plane, and the reference plane is perpendicular to the thickness direction of the coil structure.

4. The coil module according to claim 3, wherein a thickness of the coil module is less than 0.2 mm.

5. The coil module according to claim 1, wherein the coil structure further comprises a flexible circuit board unit; and the flexible circuit board unit is located in a preset region in the second wiring sublayer, and the preset region is a region that is in the second wiring sublayer and in which the second end is not disposed.

6. The coil module according to claim 5, wherein the preset region comprises a first sub-region, and the first sub-region is a region formed by outwardly extending a projection of the outermost coil group on the second wiring sublayer by a first preset length in all directions; and
when a line width of the flexible circuit board unit in the first sub-region is greater than a second preset length, a trace of the flexible circuit board unit in the first sub-region is cut into a plurality of lines.

7. The coil module according to claim 5, wherein the coil module further comprises a magnetically conductive layer; and in the thickness direction of the coil structure, the magnetically conductive layer is located on a side that is of the second wiring sublayer and that faces away from the first wiring sublayer.

8. The coil module according to any one of claims 1-7, wherein there are N coil groups, and N is less than or equal to 8 and greater than or equal to 7.

9. The coil module according to claim 8, wherein there are seven coil groups, a thickness of the first wiring sublayer is greater than or equal to 25 µm and less than or equal to 40 µ, each coil group comprises M strands of wires, and M is greater than or equal to 3.

10. The coil module according to claim 9, wherein M is 4.

11. The coil module according to claim 8, wherein there are seven coil groups, a thickness of the first wiring sublayer is less than or equal to 25 µm, each coil group comprises M strands of wires, and M is less than or equal to 4.

12. The coil module according to claim 11, wherein M is 3.

13. The coil module according to claim 8, wherein there are eight coil groups, a thickness of the first wiring sublayer is greater than or equal to 25 µm and less than or equal to 40 µ, each coil group comprises M strands of wires, and M is greater than or equal to 2.

14. The coil module according to claim 13, wherein M is 3.

15. The coil module according to claim 8, wherein there are eight coil groups, a thickness of the first wiring sublayer is less than or equal to 25 µm, each coil group comprises M strands of wires, and M is less than or equal to 3.

16. The coil module according to claim 15, wherein M is 3.

17. The coil module according to any one of claims 1-16, wherein in a direction away from a center of the coil structure, widths of the plurality of coil groups gradually increase.

18. The coil module according to any one of claims 1-16, wherein there are N coil groups, and the N coil groups comprise L inner coil groups and (N-L) outer coil groups disposed around the L inner coil groups;
each coil group comprises a plurality of strands of wires; and
a quantity of strands of wires located in the outer coil group is greater than a quantity of strands of wires located in the inner coil group.

19. The coil module according to any one of claims 1-18, wherein the coil structure is an FPC coil.

20. An electronic device, comprising the coil module according to any one of claims 1-19.

21. The electronic device according to claim 20, wherein the coil structure further comprises at least one flexible circuit board unit; and the flexible circuit board unit is located in a preset region in the second wiring sublayer, and the preset region is a region that is in the second wiring sublayer and in which the second end is not disposed; and
the electronic device further comprises a printed circuit board, and the flexible circuit board unit is connected to the printed circuit board.

22. The electronic device according to claim 21, wherein the printed circuit board comprises a main board and a sub-board, and the main board is connected to the sub-board through the flexible circuit board unit.

23. The electronic device according to claim 21, wherein the electronic device further comprises a functional component, and the functional component is connected to the printed circuit board through the flexible circuit board unit.

24. The electronic device according to claim 23, wherein the functional component comprises a speaker or a SIM card.

25. The electronic device according to claim 21, wherein the flexible circuit board unit is disposed as an NFC coil.

26. The electronic device according to any one of claims 20-25, wherein the electronic device comprises a wireless charging receiving device or a wireless charging sending device.

27. A wireless charging system, comprising the electronic device according to any one of claims 20-26.
